# EUROPEAN PATENT APPLICATION

(11) **EP 4 582 967 A1**
(43) Date of publication of application: **09.07.2025**
(21) Application number: 23876325.4
(22) Date of filing: 15.08.2023
(51) Int. Cl.: G06F 16/16

(54) **FILE MANAGEMENT METHOD, AND DEVICE AND STORAGE MEDIUM**

(30) Priority: 14.10.2022 CN 202211259598
(71) Applicant: Honor Device Co., Ltd., Shenzhen, Guangdong 518040 (CN)
(72) Inventor: BAO, Xintong, Shenzhen, Guangdong 518040 (CN)
(74) Representative: MERH-IP Matias Erny Reichl Hoffmann Patentanwälte PartG mbB
(86) International application number: PCT/CN2023/113127
(87) International publication number: WO 2024/078120

(57) **Abstract**

This application provides a file management method, a device, and a storage medium. In the method, a file frequently used by a user is added to a display card on a home screen for management, so that the user does not need to search a file management application gradually based on a storage path, and can directly tap a corresponding file icon on the home screen to open the file that the user wants to view. This is convenient and fast, and greatly improves user experience.

## Description

This application claims priority to Chinese Patent Application No. 202211259598.7, filed with the China National Intellectual Property Administration on October 14, 2022 and entitled "FILE MANAGEMENT METHOD, DEVICE, AND STORAGE MEDIUM", which is incorporated herein by reference in its entirety.

### TECHNICAL FIELD

This application relates to the field of information display technologies, and in particular, to a file management method, a device, and a storage medium.

### BACKGROUND

A file resource manager is a resource management tool provided by an operating system. The file resource manager may be used to view various files, such as documents, pictures, audio and video data, that are downloaded and stored by a user in an electronic device.

However, when viewing various files managed by the file resource manager, the user needs to learn specific paths to which the files to be viewed belong. For some files received by using a third-party application, because default paths of the files are relatively deep, for example, a plurality of folders are nested, the user cannot quickly and accurately find a file that the user wants to view.

### SUMMARY

To resolve the foregoing technical problem, this application provides a file management method, a device, and a storage medium, to reduce operation complexity, so that a user can quickly and accurately find a file that the user wants to view.

According to a first aspect, this application provides a file management method. The method includes: displaying a first interface, where the first interface includes a first card, the first card includes M file icons, each of the M file icons corresponds to one file in an electronic device, and M is a positive integer.

The first interface may be, for example, a home screen 10a described below, and the first card is, for example, home screen cards 10a-1, 10a-2, 10a-3, and 10a-4 described below.

A maximum value of M may be set based on a service requirement, for example, 20 described below, that is, the first card can display file icons of a maximum of 20 files.

For example, each file icon in the first card may display, for example, a file name and a file format of a corresponding file.

A file type includes but is not limited to a document, a picture, a video, audio, a compressed packet, an application, and the like describe below.

In this way, a home screen card used for file management is displayed on a home screen, and a shortcut entry of a file that meets a use requirement of a user is directly displayed in the home screen card based on a requirement of the user, for example, the foregoing file icon for establishing a shortcut with a file. Therefore, the user can directly search the home screen card to directly open the file that the user wants to view. A whole search process is convenient and simple, and user experience is greatly improved.

According to the first aspect, the first interface is a home screen; and the displaying a first interface includes: displaying a home screen card setting entry on the home screen in response to a first operation; displaying a setting interface of a home screen card in response to a second operation performed on the home screen card setting entry, where the setting interface includes a home screen card entry for file management; displaying a card form selection interface in response to a third operation performed on the home screen card entry for file management; adding the first card to the home screen based on a selected card form in response to a fourth operation performed on the card form selection interface; and adding a file to the first card in response to a fifth operation, and displaying a file icon corresponding to the file in the first card.

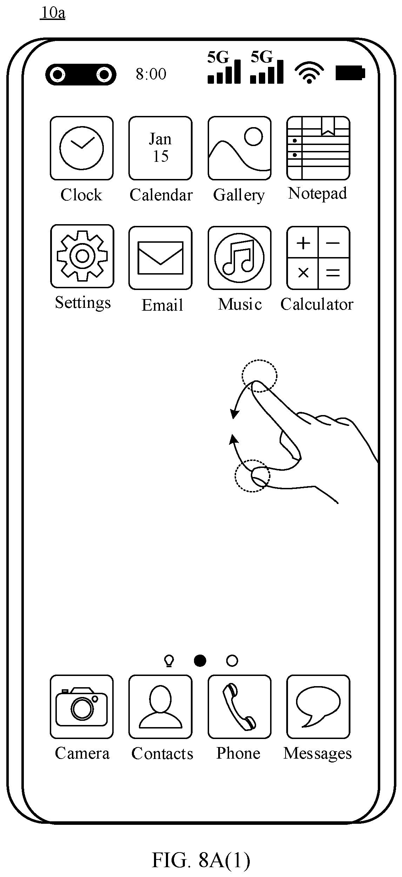

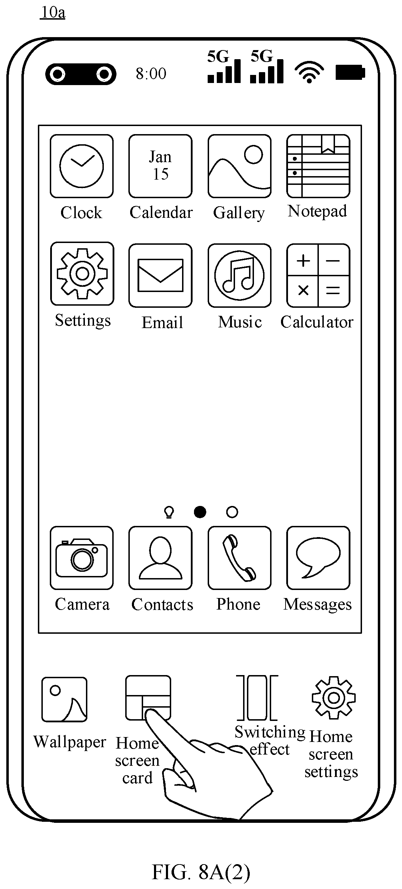

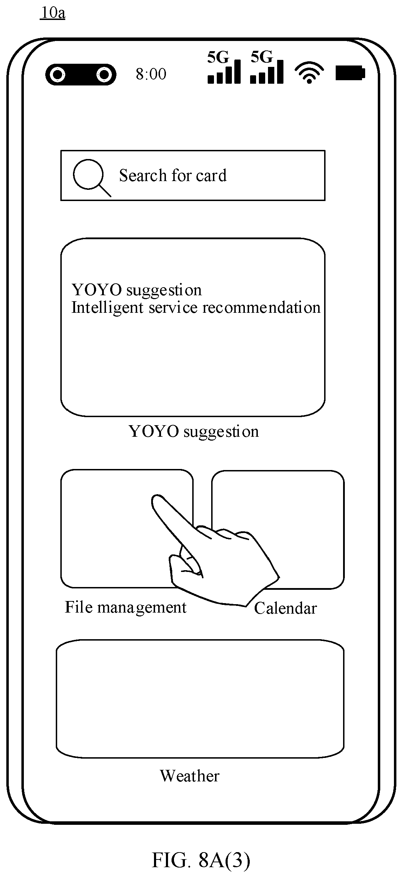

The first operation is, for example, a double-finger kneading operation described below, as shown in FIG. 8A(1).

The home screen card setting entry is, for example, a "Home screen card setting control" shown in FIG. 8A(2).

It may be understood that in actual application, after a user performs the first operation on the home screen, the electronic device may further display, in response to the first operation, a wallpaper setting control, a switching effect setting control, a home screen setting control, and the like described below.

The second operation is, for example, the following described tap operation on the home screen card setting control.

The setting interface is, for example, an interface shown in FIG. 8A(3). As shown in FIG. 8A(3), the setting interface may include a card entry of an intelligent service recommendation (YOYO recommendation) type, a card entry corresponding to a calendar application, a card entry corresponding to a weather application, and a home screen card entry for file management (that is, a home screen card entry of a file in a management file management application).

The third operation is, for example, a tap operation on the home screen card entry corresponding to the file management application, as shown in FIG. 8A(3).

The card form selection interface is, for example, an interface 10c described below.

The fourth operation is, for example, a tap operation on a control 10c-1 in the interface 10c in the following.

For specific implementation details of selecting a card form of the first card in the card form selection interface and adding/creating the first card on the home screen, refer to the following descriptions. Details are not described herein.

The fifth operation is, for example, an operation on a control 10f-3 displayed in an interface 10f in the following, or an operation on the file management application, or an operation directly performed on the first card directly. For details, refer to the following descriptions. Details are not described herein.

Therefore, an operation is performed on the home screen to add the first card, and frequently used files are added to the first card, so that when these files are subsequently viewed again, the files can be quickly found by using the first card, without accessing the files from the file management application level by level based on a storage path, which is convenient and simple to operate.

According to the first aspect or any one of the foregoing implementations of the first aspect, the adding a file to the first card in response to a fifth operation includes: displaying a file addition floating ball in a file preview interface, where the file addition floating ball is in a folded state; displaying a first navigation bar of the file addition floating ball in response to a sixth operation performed on the file addition floating ball, where the first navigation bar displays an addition entry for adding a file displayed in the file preview interface to the first card; and in response to a seventh operation performed on the addition entry, adding the file displayed in the file preview interface to the first card, and collapsing the first navigation bar, where the file addition floating ball is in the folded state.

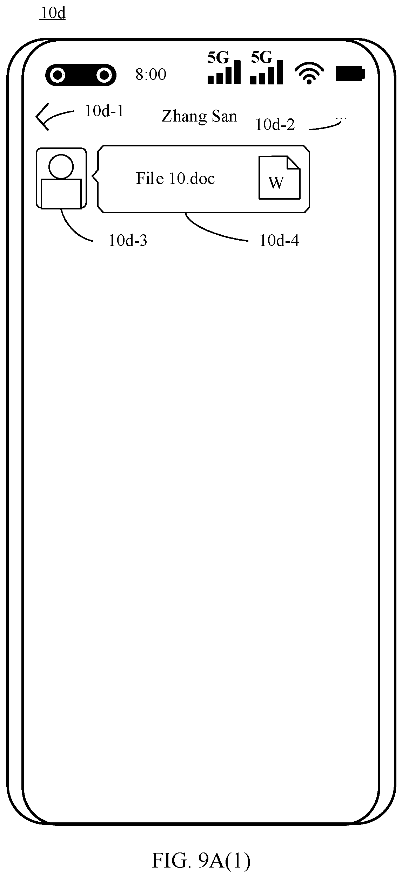

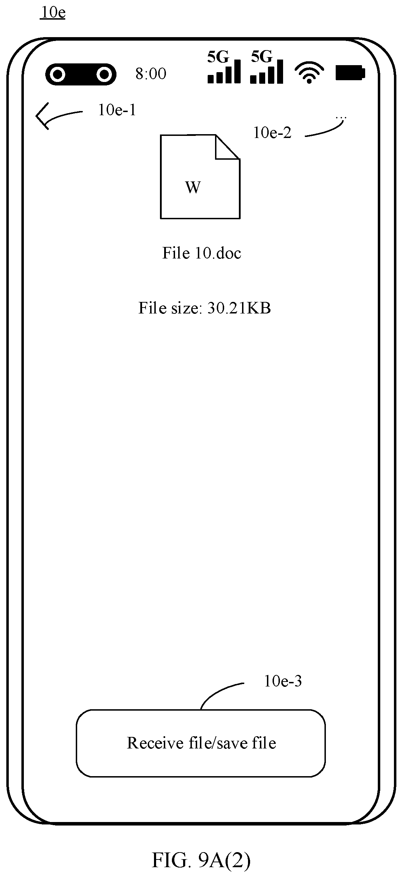

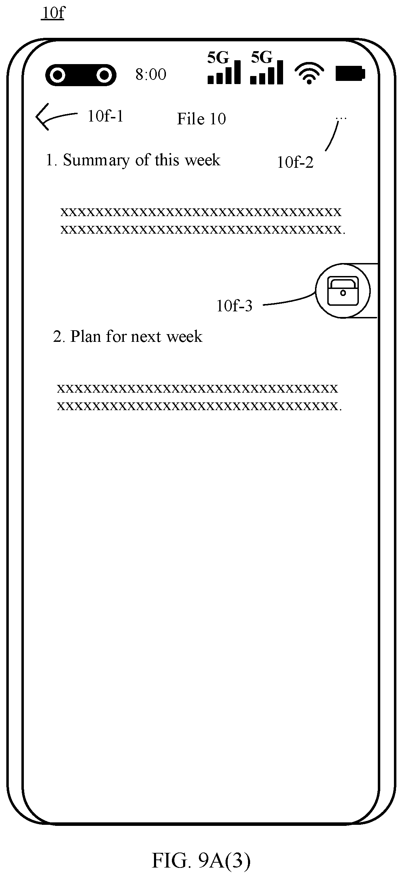

The file preview interface is, for example, an interface 10f-1 described below, and the file addition floating ball in the folded state is, for example, a style of the control 10f-3 shown in FIG. 9A(3).

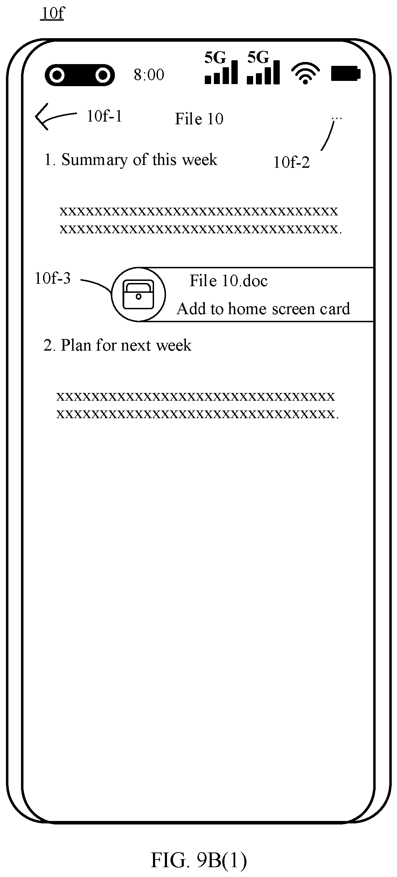

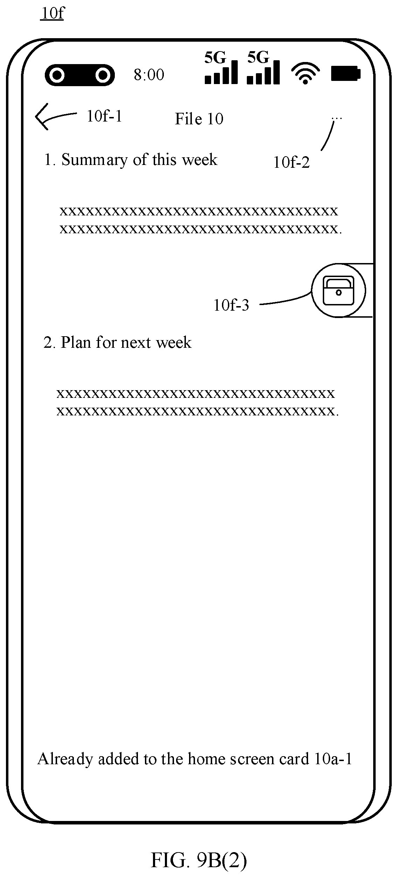

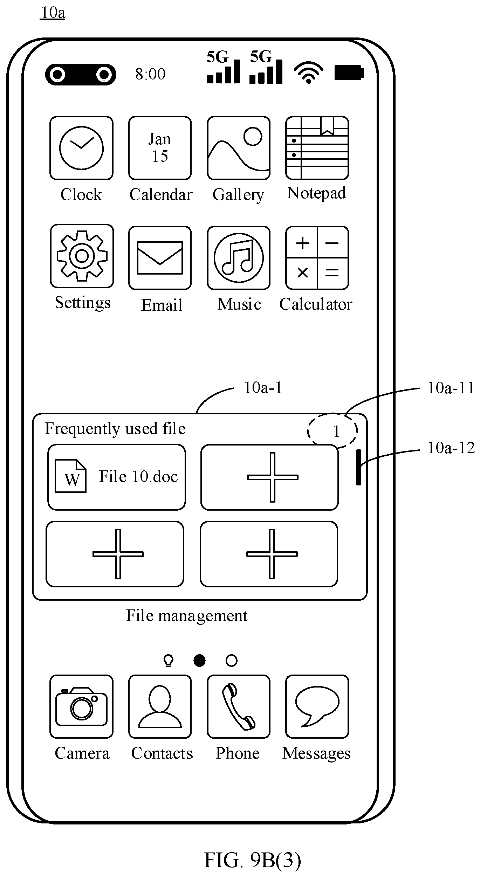

The sixth operation is, for example, a tap operation performed on the control 10f-3 in the following, and a style of the first navigation bar displayed by the file addition floating ball is, for example, a style of the control 10f-3 shown in FIG. 9B(1).

The addition entry of the first card is, for example, an "Add to home screen card" option shown in FIG. 9B(1).

The sixth operation is, for example, a tap operation on the "Add to home screen card" option in the following.

In response to the seventh operation performed on the "Add to home screen card" option, a change of the interface 10f may be shown in FIG. 9B(2), and a change of the first card may be shown in FIG. 9B(3).

It may be understood that in this thirty-party application, in a manner of adding a file to the first card by using the file addition floating ball, the fifth operation includes at least the sixth operation and the seventh operation described above. For specific implementation details, refer to the following descriptions. Details are not described herein.

In this way, the file addition floating ball that can be used to add a file to the first card on the home screen is provided in the file preview interface, and in a preview state, the file addition floating ball is in the folded state, and does not affect viewing of file content by a user. However, when a previewed file needs to be added to the first card to facilitate subsequent quick viewing, the file addition floating ball can be directly operated, and user experience is better.

According to the first aspect or any one of before the adding the file displayed in the file preview interface to the first card, the method further includes: displaying a first prompt window, where the first prompt window includes a first option and a second option; when an eighth operation performed on the first option is received, in response to the eighth operation, adding the file in the file preview interface to the first card, and canceling display of the first prompt window; and when a ninth operation performed on the second option is received, in response to the ninth operation, creating a new card, adding the file in the file preview interface to the newly created card, and canceling display of the first prompt window.

The first prompt window is, for example, a window 10f-4 described below, the first option is, for example, a control 10f-41 described below, and the second option is, for example, a control 10f-42 described below.

The eighth operation is, for example, the following described operation of selecting the control 10f-41 and then tapping an "OK" button, and the ninth operation is, for example, the following described operation of selecting the control 10f-42 and then tapping an "OK" button. For details of implementing file addition by using the option provided in the first prompt window, refer to the following descriptions. Details are not described herein.

In this way, a file may be added to the existing first card, or a new card may be created based on a user requirement, and the file is added to the new card, to better adapt to different application scenarios.

According to the first aspect or any one of the foregoing implementations of the first aspect, the method further includes: collapsing the first navigation bar when specified time is reached and the seventh operation is not received, where the file addition floating ball is in the folded state; or collapsing the first navigation bar when a tenth operation performed on the file preview interface is received in the specified time, where the file addition floating ball is in the folded state.

In this way, when a user does not need to use the addition entry in the first navigation bar of the file addition floating ball, the user collapses the first navigation bar of the file addition floating ball, so that the file addition floating ball is in the folded state, to reduce, as small as possible, shielding of file content displayed in the file preview interface.

According to the first aspect or any one of the foregoing implementations of the first aspect, the adding a file to the first card in response to a fifth operation includes: displaying a second interface in response to a tenth operation performed on a file management application, where the second interface is a page that is opened level by level based on a storage path, and the second interface displays a to-be-added file; displaying a second navigation bar in response to an eleventh operation performed on the second interface, where the second navigation bar includes a third option; displaying a first menu bar in response to a twelfth operation performed on the third option, where the first menu bar includes a fourth option; and after the to-be-added file is selected, adding the to-be-added file to the first card in response to a thirteenth operation performed on the fourth option.

The tenth operation is, for example, the following described operation of opening the file management application and accessing and opening an interface 10g level by level based on a storage path of the interface 10.

Correspondingly, the second interface is, for example, the interface 10g.

The eleventh operation is, for example, an operation performed on the interface 10g in the following, for example, a touch and hold operation.

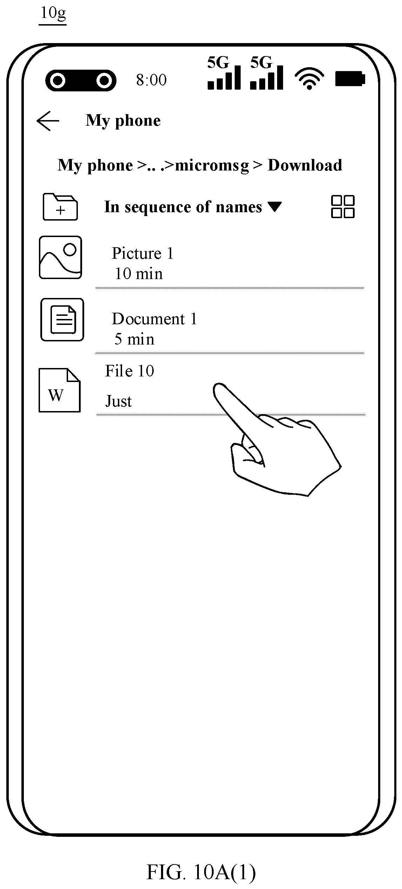

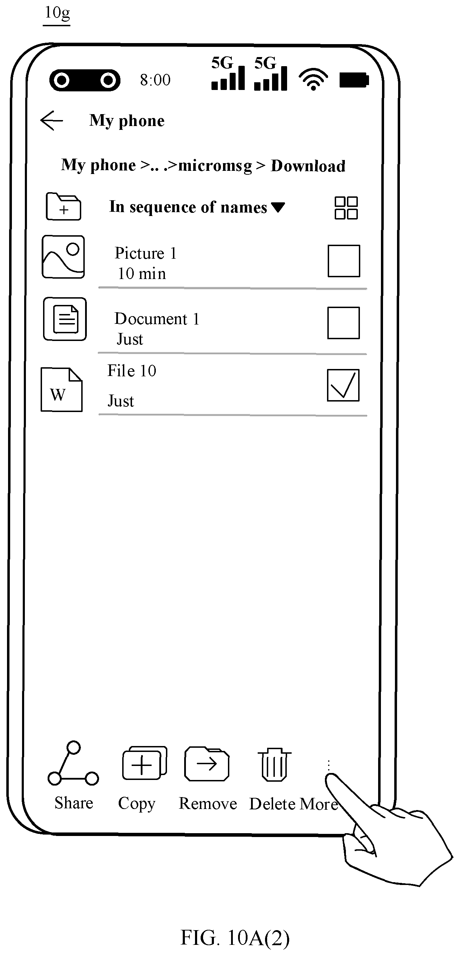

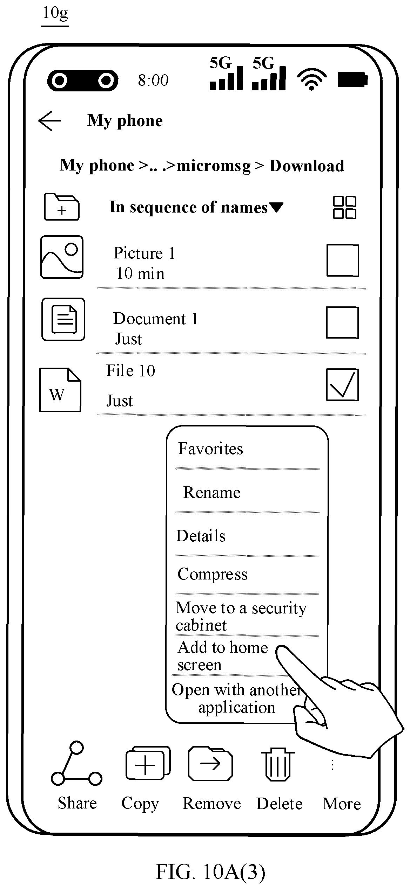

The third option is, for example, a "More option control" shown in FIG. 10A(2).

It may be understood that, the second navigation bar may further include a share control, a copy control, a move control, a delete control, and the like described below. For functions of the controls, refer to the following descriptions. Details are not described herein.

The twelfth operation is, for example, a tap operation performed on the "More option control".

In the first menu bar, for example, in FIG. 10A(3), a window that includes more options pops up in the interface 10g. In addition to the fourth option (an "Add to home screen" option shown in FIG. 10A(3) described above, the options included in the window may further include a "Favorites" option, a "Rename" option, a "Details" option, a "Compress" option, a "Move to security cabinet" option, and a "Open with another application" option.

The thirteenth operation is, for example, a tap operation on the "Add to home screen" option described below.

In this way, this file addition manner is provided, so that a user can add a locally stored file to the first card, thereby facilitating subsequent use.

According to the first aspect or any one of the foregoing implementations of the first aspect, the first card further includes a file addition entry; and the adding a file to the first card in response to a fifth operation includes: displaying a third interface in response to a fourteenth operation performed on the file addition entry, where the third interface displays a to-be-added file and a fifth option; and after the to-be-added file is selected, adding the to-be-added file to the first card in response to a fifteenth operation performed on the fifth option.

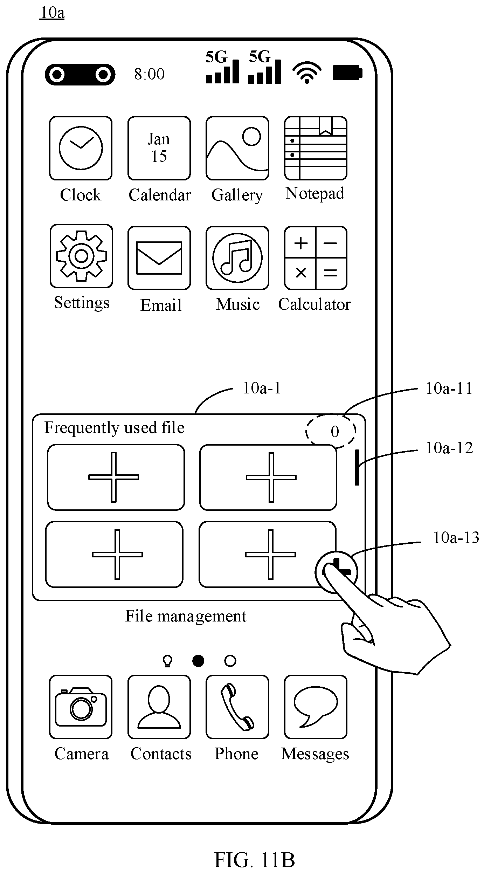

For example, the file addition entry included in the first card is a control 10a-13 shown in FIG. 11B.

It may be understood that, in some implementations, the file addition entry may alternatively be an area that is in the first card and that is used to display a file icon.

The fourteenth operation is, for example, a tap operation on the control 10a-13.

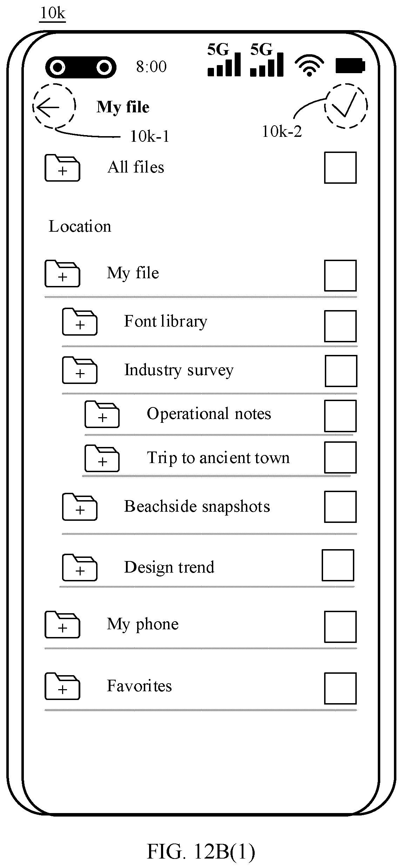

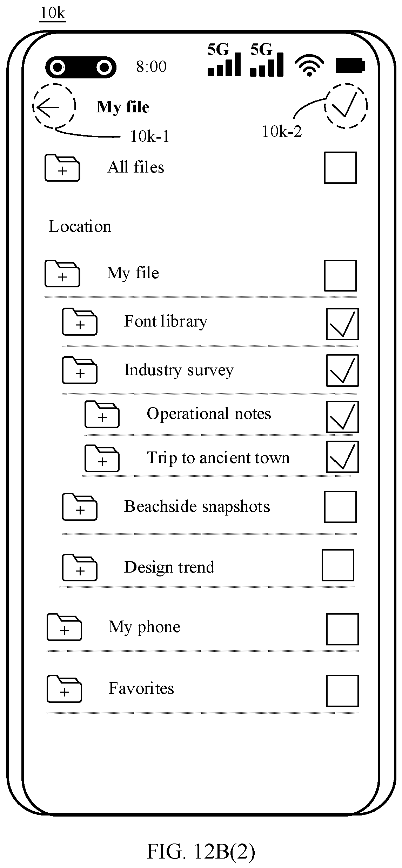

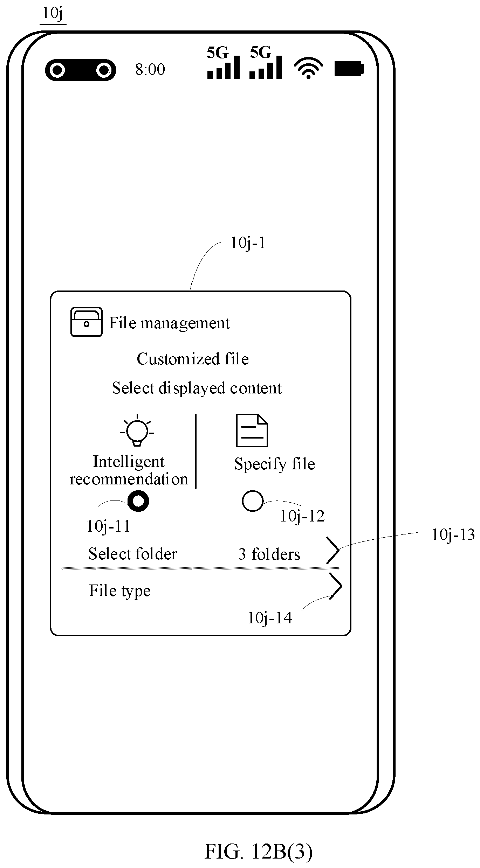

The third interface is, for example, an interface 10k shown in FIG. 12B(1), and the fifth option is, for example, a control 10k-2.

The fifteenth operation is, for example, a tap operation on the control 10k-2.

For details of a manner of adding a file to the first card by using the two file addition entries, refer to the following descriptions. Details are not described herein.

In this way, a user can directly operates the first card displayed on the home screen to directly jump to the third interface in which a file can be selected, and then select a file that needs to be added to add the file to the first card.

According to the first aspect or any one of the foregoing implementations of the first aspect, the first interface is a home screen, a second card is displayed on the home screen, and the second card is a home screen card for file management; and the displaying a first interface includes: displaying a second menu bar in response to a sixteenth operation performed on the second card, where the second menu bar includes a more file management card option; displaying a card form selection interface in response to a seventeenth operation performed on the more file management card option; adding the first card to the home screen based on a selected card form in response to an eighteenth operation performed on the card form selection interface; and adding a file to the first card in response to a nineteenth operation, and displaying a file icon corresponding to the file in the first card.

The second card is, for example, a home screen card 10a-4 described below.

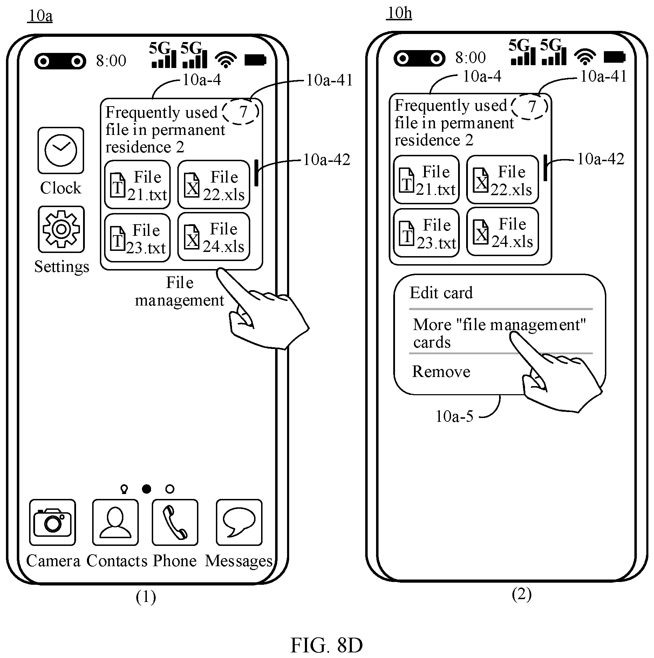

The sixteenth operation is, for example, a tap operation or a touch and hold operation performed on the home screen control 10a-4 in the following, and the displayed second menu bar may be a window 10a-5 shown in part (2) of FIG. 8D.

It may be understood that, in addition to including the more file management card option, the second menu bar may further include an edit card option, a remove option, and the like described below.

The remove option in the second menu bar may be used to remove the second card from the home screen, and the edit card option in the second menu bar may be used to edit a source of a file managed in the second card. An implementation of the second card is similar to that of the first card. For details, refer to the following descriptions. Details are not described herein.

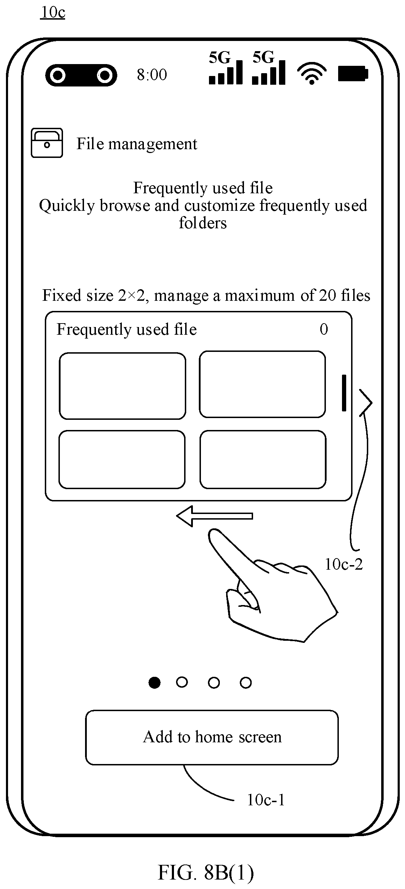

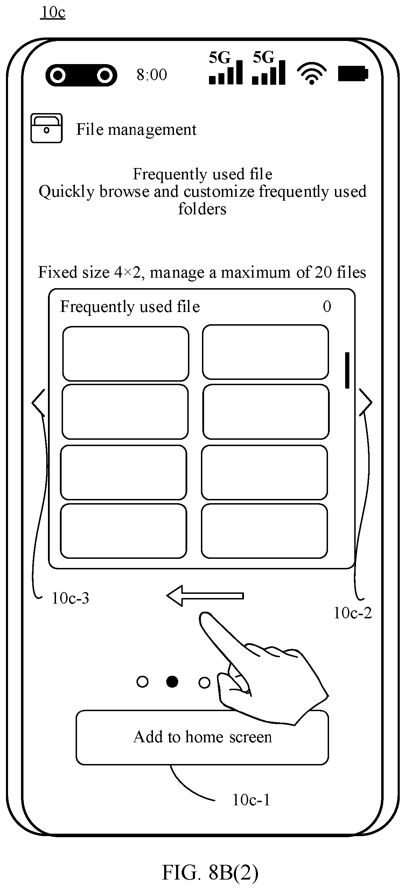

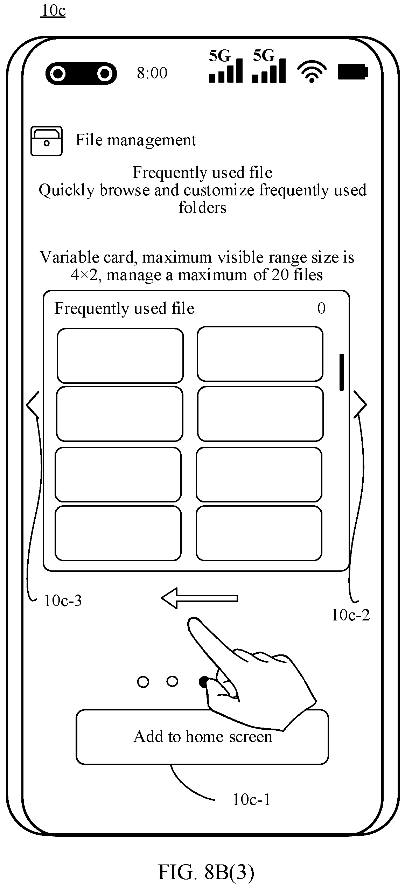

The seventeenth operation is, for example, a tap operation performed on more file management card option. After the operation is performed on the option, directly jump to the card form selection interface, such as the interface 10c shown in FIG. 8B(1).

Implementation of performing the eighteenth operation on the interface 10c to add the first card to the home screen, and adding the file to the first card in response to the nineteenth operation is similar to the fourth operation and the fifth operation, and details are not described herein again. For specific implementation details, refer to the following descriptions.

In this way, the first card is created by using an existing card of a same type.

According to the first aspect or any one of the foregoing implementations of the first aspect, a use scenario of a file managed in the first card is different from a use scenario of a file managed in the second card.

For example, the file managed in the first card is applicable to an office scenario, that is, is usually a file used during working; and the file managed in the second card is applicable to a game scenario, for example, the managed file is a document that records a game account.

In this way, cards for file management are divided based on a scenario, so that it is more convenient for a user to perform searching.

According to the first aspect or any one of the foregoing implementations of the first aspect, a use place of a file managed in the first card is different from a use place of a file managed in the second card.

For example, files used by a user are different in a permanent residence, namely, a company, and a permanent residence, namely, a residential place. In this way, corresponding files are separately managed based on use places, so that it is convenient for a user to quickly find a file required by the user from a corresponding card.

According to the first aspect or any one of the foregoing implementations of the first aspect, the method further includes: displaying a third menu bar in response to a twentieth operation performed on the first card, where the third menu bar includes a remove option and an edit option; and removing the first card from the home screen in response to a twenty-first operation performed on the remove option.

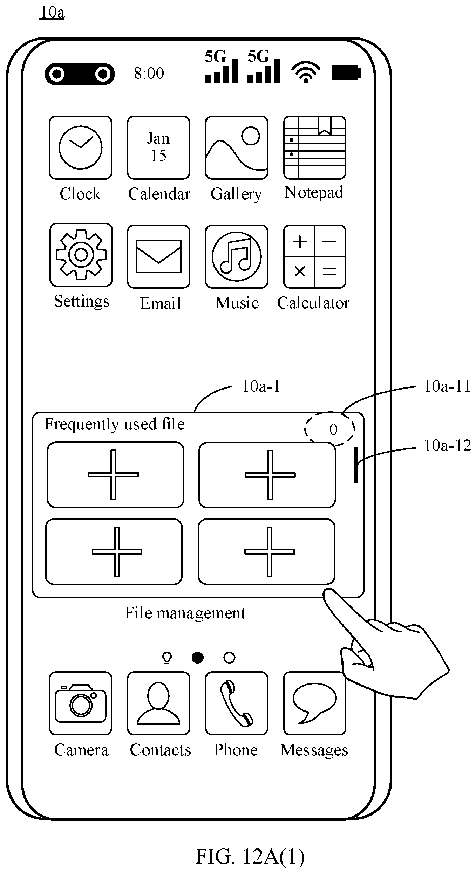

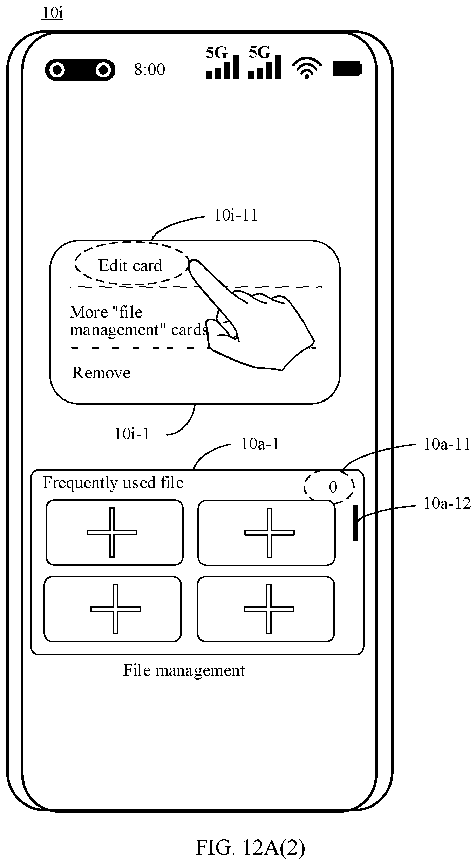

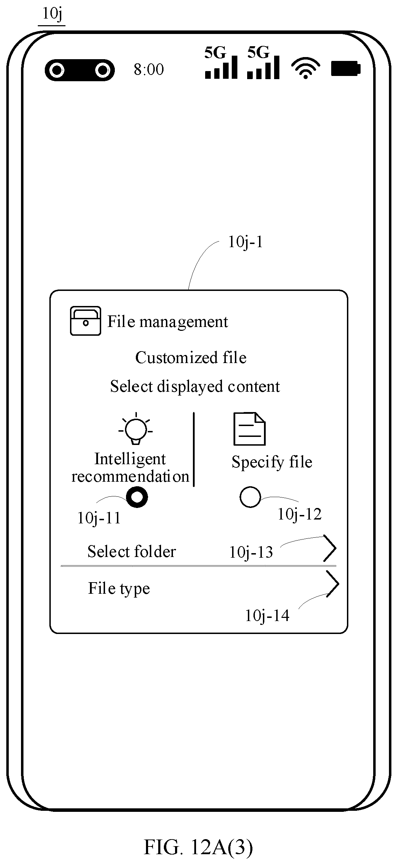

For example, the twentieth operation is, for example, an operation such as a touch and hold operation performed on the home screen card 10a-1 shown in FIG. 12A(1) in the following.

The third menu bar is, for example, a window 10i-1 shown in FIG. 12A(2). It may be understood that, in addition to including the remove option and the edit option, the third menu bar may further include a more file management card setting option.

The twenty-first operation is, for example, a tap operation on the remove option in the window 10i-1 in the following.

**In** this way, the third menu bar is swapped out performing an operation on a card to be deleted, and then the entire card can be directly deleted by using the remove option in the third menu bar, which is convenient and fast.

**In** addition, in actual application, one or more files in a card may be deleted separately. For a specific implementation, refer to the following descriptions. Details are not described herein.

According to the first aspect or any one of the foregoing implementations of the first aspect, the method further includes: displaying a first file source option and a second file source option in response to a twenty-second operation performed on the edit option; when an operation on the first file source option is received, recommending M files from a folder selected by a user as the M files managed in the first card, or recommending M files from N folders recommended by a system as the M files managed in the first card; and when an operation on the second file source option is received, using M files selected by the user as the M files managed in the first card.

The twenty-second operation is, for example, the following described operation such as a tap operation performed on an "Edit card" setting option 10i-11 in the window 10i-1.

The first file source option is a control 10j-11 corresponding to an "Intelligent recommendation" manner described below, and the second file source option is a control 10j-12 corresponding to a "Specified file" manner described below.

For details of performing an operation on the first file source option and performing an operation on the second file source option to set a file source and add a file, refer to the following descriptions. Details are not described herein.

According to the first aspect or any one of the foregoing implementations of the first aspect, a card size of the first card is fixed.

The size of the first card is, for example, a fixed size such as 2×2 or 4×2.

According to the first aspect or any one of the foregoing implementations of the first aspect, a card size of the first card is variable, and a maximum size of the first card is 4×2.

For a change form and a change range of the first card whose size is variable, refer to the following descriptions. Details are not described herein.

According to the first aspect or any one of the foregoing implementations of the first aspect, the method further includes: receiving a twenty-third operation on any file icon in the first card; and switching from the first interface to a fourth interface in response to the twenty-third operation, where the fourth interface is a preview interface of a file corresponding to the tapped file icon.

For example, the twenty-third operation is, for example, tapping any file icon displayed in the first card.

The fourth interface is, for example, a default application interface for viewing a file corresponding to a file icon tapped by a user, and a form of the fourth interface may be shown in FIG. 9A(3).

According to the first aspect or any one of the foregoing implementations of the first aspect, the method further includes: when the electronic device is in a lock screen interface and is in a screen-off standby mode, in response to an operation of lighting the lock screen interface, lighting the lock screen interface, and displaying the first card in the lock screen interface.

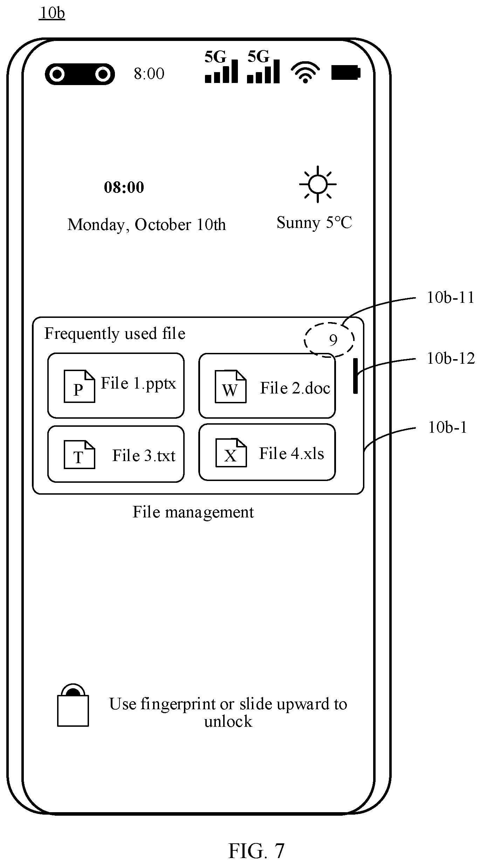

For example, the presentation form is shown in FIG. 7. For specific details, refer to the following descriptions. Details are not described herein.

According to a second aspect, this application provides an electronic device. The electronic device includes a memory and a processor. The memory is coupled to the processor, and the memory stores program instructions. When the program instructions are executed by the processor, the electronic device is enabled to execute instructions of the method in the first aspect or in any one of the possible implementations of the first aspect.

The second aspect and any one of the implementations of the second aspect respectively correspond to the first aspect and any one of the implementations of the first aspect. For technical effects corresponding to the second aspect and any one of the implementations of the second aspect, refer to the technical effects corresponding to the first aspect and any one of the implementations of the first aspect. Details are not described herein again.

According to a third aspect, this application provides a computer-readable medium, configured to store a computer program. The computer program includes instructions for performing the method in the first aspect or any one of the possible implementations of the first aspect.

The third aspect and any one of the implementations of the third aspect respectively correspond to the first aspect and any one of the implementations of the first aspect. For technical effects corresponding to the third aspect and any one of the implementations of the third aspect, refer to the technical effects corresponding to the first aspect and any one of the implementations of the first aspect. Details are not described herein again.

According to a fourth aspect, this application provides a computer program. The computer program includes instructions for performing the method in the first aspect or any one of the possible implementations of the first aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to the technical effects corresponding to the first aspect and any one of the implementations of the first aspect. Details are not described herein again.

According to a fifth aspect, this application provides a chip. The chip includes a processing circuit and a transceiver pin. The transceiver pin and the processing circuit communicate with each other through an internal connection channel. The processing circuit performs the method in the first aspect or any one of the possible implementations of the first aspect, to control a receive pin to receive a signal, and to control a transmit pin to send a signal.

The fifth aspect and any one of the implementations of the fifth aspect respectively correspond to the first aspect and any one of the implementations of the first aspect. For technical effects corresponding to the fifth aspect and any one of the implementations of the fifth aspect, refer to the technical effects corresponding to the first aspect and any one of the implementations of the first aspect. Details are not described herein again.

### BRIEF DESCRIPTION OF DRAWINGS

FIG. 1A to FIG. 1E is a schematic diagram of example interfaces for searching for a file by using a file management application;
FIG. 2 is a schematic diagram of an example hardware structure of an electronic device;
FIG. 3 is a schematic diagram of an example software structure of an electronic device;
FIG. 4A and FIG. 4B are first schematic diagrams of example interfaces of card forms of a home screen card that is added to a home screen of an electronic device and that corresponds to file management;
FIG. 5A to FIG. 5C are second schematic diagrams of example interfaces of card forms of a home screen card that is added to a home screen of an electronic device and that corresponds to file management;
FIG. 6 is a third schematic diagram of an example interface of a card form of a home screen card that is added to a home screen of an electronic device and that corresponds to file management;
FIG. 7 is a schematic diagram of an example interface of a card form of a home screen card that is displayed in a lock screen interface of an electronic device and that corresponds to file management;
FIG. 8A(1) to FIG. 8D are schematic diagrams of example interfaces for adding, to a home screen of an electronic device, a home screen card corresponding to file management;
FIG. 9A(1) to FIG. 9C(3) are first schematic diagrams of example interfaces for adding a file to a home screen card for file management;
FIG. 10A(1) to FIG. 10B(3) are second schematic diagrams of example interfaces for adding a file to a home screen card for file management;
FIG. 11A to FIG. 11C are third schematic diagrams of example interfaces for adding a file to a home screen card for file management;
FIG. 12A(1) to FIG. 12C(3) are first schematic diagrams of example interfaces for editing a home screen card for file management;
FIG. 13A and FIG. 13B are second schematic diagrams of example interfaces for editing a home screen card for file management; and
FIG. 14A(1) to FIG. 14B(3) are schematic diagrams of example interfaces for deleting a file managed in a home screen card for file management.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. All other embodiments obtained by persons of ordinary skill in the art based on the embodiments of this application without creative efforts shall fall within the protection scope of this application.

The term "and/or" in this specification is merely used to describe an association relationship between associated objects and represents that three relationships may exist. For example, "A and/or B" may represent the following three cases: Only A exists, both A and B exist, and only B exists.

In the specification and claims in the embodiments of this application, the terms "first", "second", and the like are intended to distinguish between different objects but do not indicate a particular order of the objects. For example, a first target object, a second target object, and the like are intended to distinguish between different target objects, but do not indicate a particular order of the target objects.

In the embodiments of this application, the word "exemplary" or "for example" is used to represent giving an example, an illustration, or a description. Any embodiment or design solution described as an "example" or "for example" in the embodiments of this application should not be explained as being more preferred or having more advantages than another embodiment or design solution. Exactly, use of the word such as "example" or "for example" is intended to present a related concept in a specific manner.

In the descriptions of the embodiments of this application, unless otherwise stated, "a plurality of" means two or more. For example, a plurality of processing units refer to two or more processing units; and a plurality of systems refer to two or more systems.

Currently, an electronic device may receive and download, by using a third-party APP such as an instant messaging application (application, APP) or an email APP, various files such as a document, a picture, audio, or a video sent by another electronic device; or may download various files from a network by using a third-party APP such as a browser APP or a video APP. After these files are downloaded to the electronic device, the files are managed by a file resource manager of the electronic device. To help a user view various files managed by the file resource manager, a user-oriented file management APP is provided at an application layer of the electronic device, so that the user can view, by using the file management APP, the various files managed by the file resource manager.

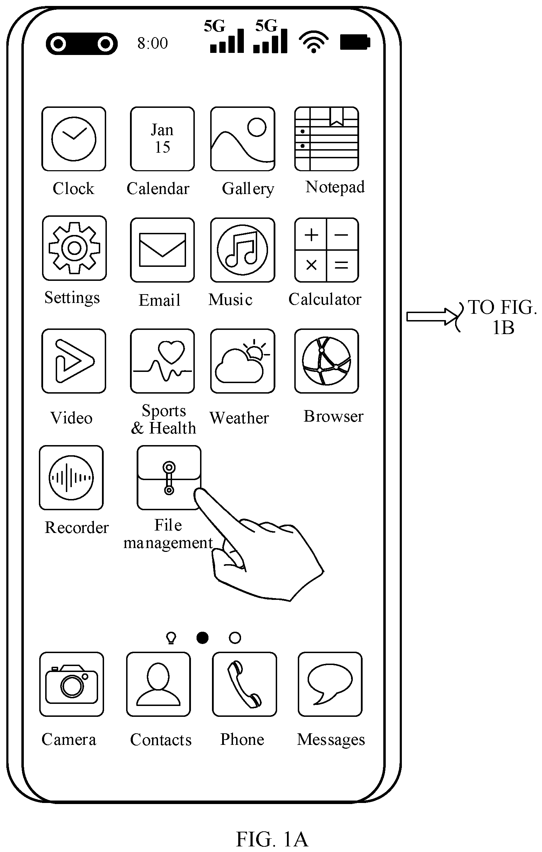

A manner in which a user views, by using the file management APP, a file managed by the file resource manager is described below with reference to FIG. 1A to FIG. 1E.

Specifically, if a user wants to search for a file named "document 1" received from an instant messaging APP, the user needs to know a default file storage path of the instant messaging APP in an Android system, and then operate the electronic device to enter the file management APP, and search for the file based on the default storage path of the instant messaging APP in the Android system. Generally, a file received by a third-party APP may be stored in a folder "My phone". It is assumed that a default path for storing a file by the instant messaging APP is Android>Data>com.tencent.mm>MicroMsg>Download. In some implementations, the file may be directly searched for by using the file management APP on a home screen; or in some other implementations, an entry of the file management APP may be found by using a settings APP to search for the file.

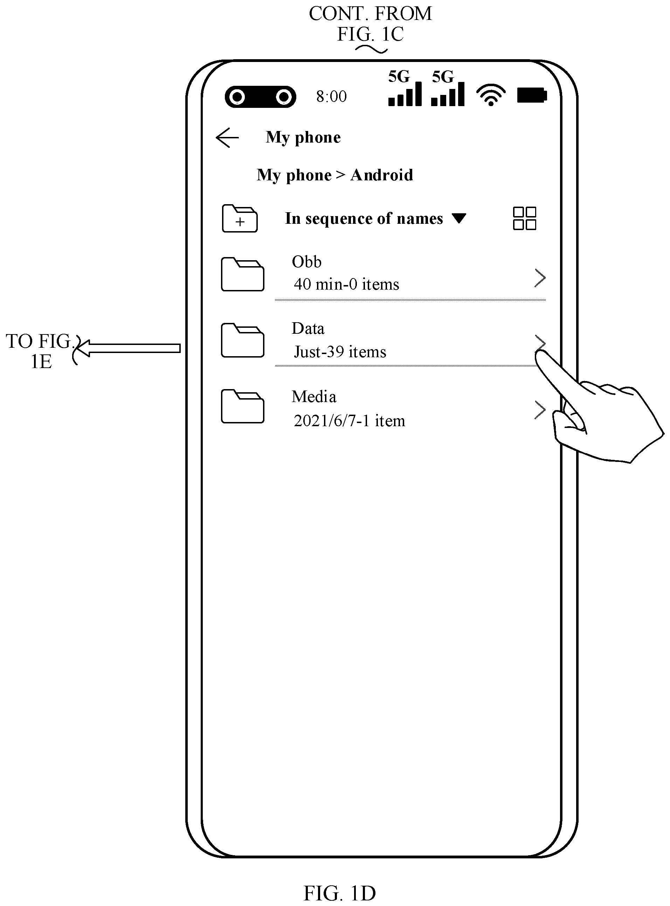

For example, in the manner of directly searching for the file by using the file management APP on the home screen, as shown in FIG. 1A, the user first taps an icon of the file management APP on the home screen to enter an interface of the file management APP, then taps the "My phone" folder, and then accesses a directory Data>com.tencent.mm>MicroMsg>Download (not all levels of directories are shown in FIG. 1D) level by level. The user can see an icon (as shown in a dashed-line box in FIG. 1D) of the document 1 in a Download folder, so that the user can perform an operation on the document 1.

However, in this manner, the user needs to learn a storage path of a file to be viewed, and search for the file by accessing a corresponding folder based on the path level by level. In actual use, the electronic device receives and downloads a large quantity of files by using different APPs. However, in the Android system, a path used by the electronic device to store a received file is complex, and storage paths of files received by different APPs are not necessarily the same. As a result, a file from a thirty-party APP is not easy to search for after being stored in the local electronic device. Because the user usually does not know a storage path used when a file is stored in the Android system, it is difficult to find a required file, resulting in difficulty in finding the file and poor user experience.

In view of this, this application provides a file management method, to reduce operation complexity of searching for a file by a user, so that the user can quickly and accurately find a file that the user wants to view.

For a better understanding of the technical solutions provided in the embodiments of this application, before the technical solutions in the embodiments of this application are described, a hardware structure of an electronic device to which the embodiments of this application are applicable is first described with reference to the accompanying drawings.

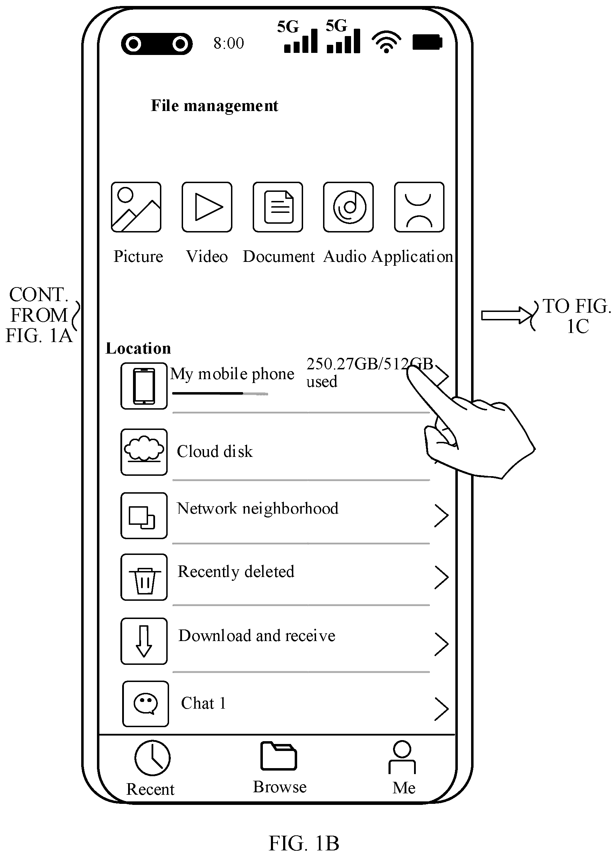

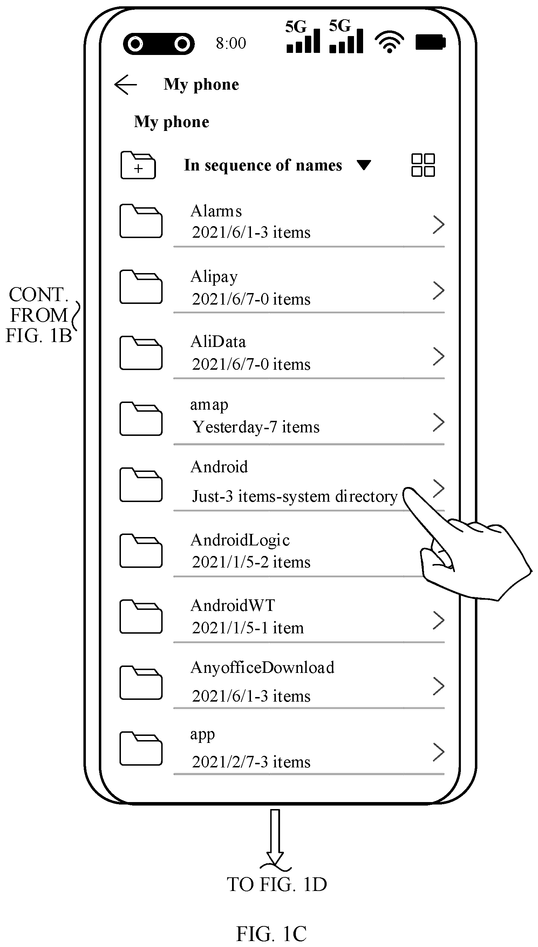

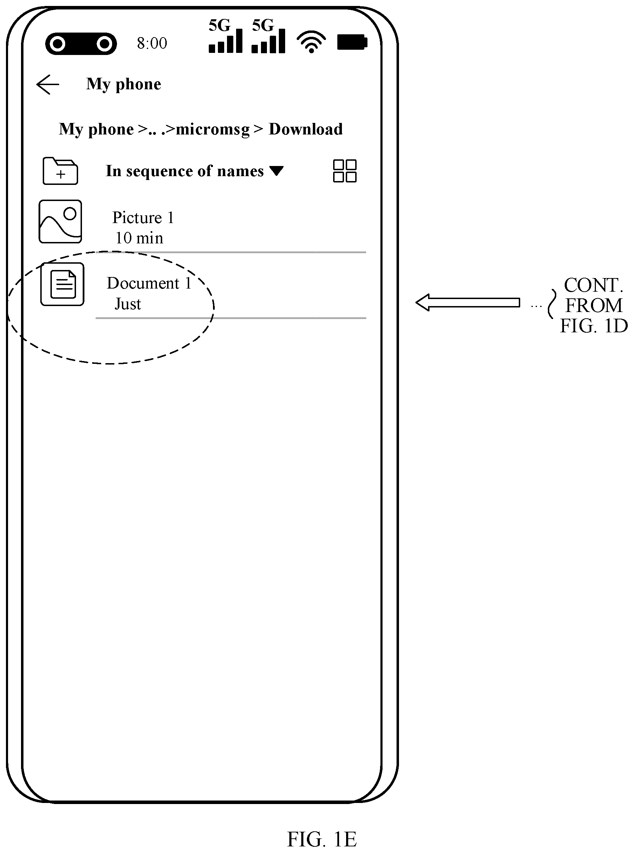

For example, the electronic device to which the file management method provided in the embodiments of this application is applicable is a mobile phone, a tablet computer, a wearable device, an in-vehicle device, an augmented reality (augmented reality, AR) device/virtual reality (virtual reality, VR) device, a notebook computer, an ultra-mobile personal computer (ultra-mobile personal computer, UMPC), a netbook, a personal digital assistant (personal digital assistant, PDA), and the like, which are not limited one by one herein. A specific type of the electronic device is not limited in the embodiments of this application. For ease of description, a mobile phone is used as an example for description in FIG. 1.

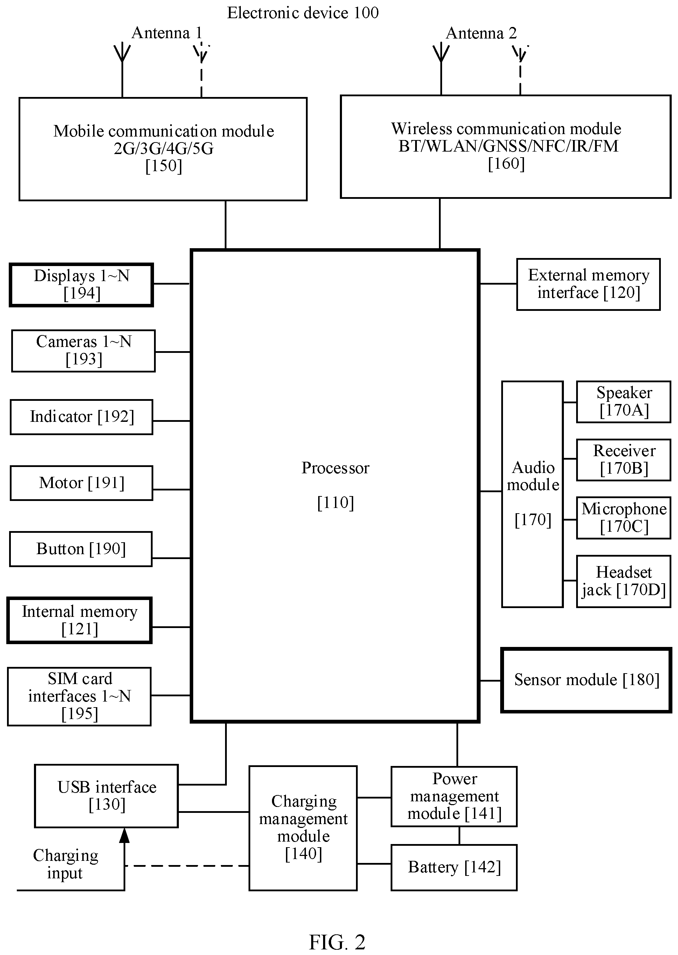

Referring to FIG. 2, an electronic device 100 may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

For example, in some implementations, the sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like, which are not listed one by one herein. This is not limited in this embodiment of this application.

Specifically, in the technical solutions provided in the embodiments of this application, the sensor module 180 needs to include at least a touch sensor and a pressure sensor.

The pressure sensor is configured to sense a pressure signal, and convert the pressure signal into an electrical signal. In some implementations, the pressure sensor may be disposed on the display 194. There are a plurality of types of pressure sensors, for example, a resistive pressure sensor, an inductive pressure sensor, and a capacitive pressure sensor. The capacitive pressure sensor may include at least two parallel plates made of conductive materials. When force is applied to the pressure sensor, capacitance between electrodes changes. The electronic device 100 determines pressure strength based on a change in the capacitance. When a touch operation is performed on the display 194, the electronic device 100 detects strength of the touch operation by using the pressure sensor. The electronic device 100 may further calculate a touch location based on a detection signal of the pressure sensor. In some implementations, touch operations performed at a same touch location but having different touch operation strength may correspond to different operation instructions. For example, when a touch operation whose touch operation strength is less than a first pressure threshold is performed on an icon of the foregoing file management APP, an instruction of opening the file management APP is executed. When a touch operation whose touch operation strength is greater than or equal to the first pressure threshold is performed on the following card that is used to display a file selected by a user or a recommended file, an operation of popping up a window that includes an edit card option is performed.

The touch sensor is also referred to as a "touch panel". The touch sensor may alternatively be disposed on the display 194. The touch sensor and the display 194 form a touchscreen, also referred to as a "touch control screen". The touch sensor is configured to detect a touch operation performed on or near the touch sensor. The touch sensor may transmit the detected touch operation to an application processor, to determine a touch event type, which may include, for example, touch event types such as sliding, tapping, and touching and holding. A visual output related to the touch operation may be provided by using the display 194. In some other implementations, the touch sensor may alternatively be disposed on a surface of the electronic device 100, and is at a location different from that of the display 194. Specifically, in the technical solutions provided in the embodiments of this application, when a user touches or taps the touchscreen, the touch sensor detects an operation behavior of the user. The electronic device 100 receives data collected by the touch sensor on the touchscreen, and responds to the operation behavior, to perform, for example, the following operation of adding a file to a card on a home screen.

In addition, it should be noted that, the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

It may be understood that, the controller may be a nerve center and a command center of the electronic device 100. In actual application, the controller may generate an operation control signal based on instruction operation code and a timing signal, to complete control of instruction fetching and instruction execution.

In addition, it should be further noted that, the memory may be further disposed in the processor 110, and is configured to store instructions and data. In some implementations, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

For example, in some implementations, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

Still referring to FIG. 2, for example, the charging management module 140 is configured to receive a charging input from a charger. The charger may be a wireless charger or may be a wired charger. In some implementations of wired charging, the charging management module 140 may receive a charging input from a wired charger through the USB interface 130. In some implementations of wireless charging, the charging management module 140 may receive a wireless charging input by using a wireless charging coil of the electronic device 100. When charging the battery 142, the charging management module 140 may further supply power to the electronic device by using the power management module 141.

Still referring to FIG. 2, for example, the power management module 141 is configured to connect to the battery 142, the charge management module 140, and the processor 110. The power management module 141 receives an input from the battery 142 and/or an input from the charging management module 140, and supplies power to the processor 110, the internal memory 121, an external memory, the display 194, the camera 193, the wireless communication module 160, and the like. The power management module 141 may further be configured to monitor parameters such as a battery capacity, a quantity of battery cycles, and a battery health status (leakage and impedance). In some other implementations, the power management module 141 may alternatively be disposed in the processor 110. In some other implementations, the power management module 141 and the charge management module 140 may alternatively be disposed in a same device.

Still referring to FIG. 2, for example, a wireless communication function of the electronic device 100 may be implemented by using the antenna 1, the antenna 2, the mobile communication module 150, the wireless communication module 160, the modem processor, the baseband processor, and the like.

It should be noted that, the antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other implementations, the antenna may be used in combination with a tuning switch.

Still referring to FIG. 2, for example, the mobile communication module 150 may provide a solution for wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some implementations, at least some functional modules of the mobile communication module 150 may be disposed in the processor 110. In some implementations, at least some functional modules of the mobile communication module 150 may be disposed in a same device as at least some modules of the processor 110.

In addition, it should be noted that, the modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and is then transmitted to the application processor. The application processor outputs a sound signal through an audio device (not limited to the speaker 170A, the receiver 170B, and the like), or displays an image or a video through the display 194. In some implementations, the modem processor may be an independent device. In some other implementations, the modem processor may be independent of the processor 110, and is disposed in a same device as the mobile communication module 150 or another functional module.

Still referring to FIG. 2, for example, the wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

Specifically, in the technical solutions provided in the embodiments of this application, the electronic device 100 may communicate with another electronic device by using the mobile communication module 150 or the wireless communication module 160, to receive a file sent by the another electronic device or download a file from a server.

In addition, it should be further noted that, the electronic device 100 implements a display function by using the GPU, the display 194, the application processor, and the like. The GPU is a microprocessor for image processing and is connected to the display 194 and the application processor. The GPU is configured to perform mathematical and geometric calculation for image rendering. The processor 110 may include one or more GPUs that execute program instructions to generate or change displayed information.

Still referring to FIG. 2, for example, the display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some implementations, the electronic device 100 may include one or N displays 194, where N is a positive integer greater than 1. Specifically, in the technical solutions provided in the embodiments of this application, some column operations of searching for a file by a user may be implemented by using a function control displayed on the display 194.

In addition, it should be further noted that, the electronic device 100 may implement a photographing function by using the ISP, the camera 193, the video codec, the GPU, the display 194, the application processor, and the like.

In addition, it should be further noted that, the ISP is configured to process data fed back by the camera 193. For example, during photographing, a shutter is open, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a photographing scene. In some implementations, the ISP may be disposed in the camera 193.

In addition, it should be further noted that, the camera 193 is configured to capture a still image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some implementations, the electronic device 100 may include one or N cameras 193, where N is a positive integer greater than 1.

In addition, it should be further noted that, the digital signal processor is configured to process a digital signal, and may further process another digital signal in addition to processing a digital image signal. For example, when the electronic device 100 performs frequency selection, the digital signal processor is configured to perform Fourier transform and the like on frequency energy.

In addition, it should be further noted that, the video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)1, MPEG2, MPEG3, and MPEG4.

Still referring to FIG. 2, for example, the external memory interface 120 may be configured to connect to an external storage card such as a Micro SD card, to expand a storage capability of the electronic device 100. The external storage card communicates with the processor 110 through the external memory interface 120 to implement a data storage function, for example, to store files such as music and a video in the external storage card.

Still referring to FIG. 2, for example, the internal memory 121 may be configured to store computer-executable program code, and the executable program code includes instructions. The processor 110 runs the instructions stored in the internal memory 121, to implement various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (universal flash storage, UFS).

Specifically, in the technical solutions provided in the embodiments of this application, various files managed by a file resource manager may be stored in the internal memory 121.

In addition, it should be further noted that, the electronic device 100 may implement an audio function, for example, music playing or recording, by using the audio module 170, the speaker 170A, the receiver 170B, the microphone 170C, the headset jack 170D, the application, and the like.

In addition, it should be further noted that, the audio module 170 is configured to convert digital audio information into an analog audio signal for output, and may also be configured to convert an analog audio input into a digital audio signal. The audio module 170 may further be configured to encode and decode an audio signal. In some implementations, the audio module 170 may be disposed in the processor 110, or some functional modules of the audio module 170 are disposed in the processor 110.

Still referring to FIG. 2, for example, the button 190 includes a power on/off button, a volume button, and the like. The button 190 may be a mechanical button, or may be a touch button. The electronic device 100 may receive a button input, and generate a button signal input related to user settings and function control of the electronic device 100.

Still referring to FIG. 2, for example, the motor 191 may generate a vibration prompt. The motor 191 may be configured to provide a vibration prompt for an incoming call, and may also be configured to provide vibration feedback for a touch. For example, touch operations performed on different applications (for example, photo taking and audio playing) may correspond to different vibration feedback effects. The motor 191 may also correspond to different vibration feedback effects for touch operations performed in different areas of the display 194. Different application scenarios (for example, a time reminder, information receiving, an alarm clock, and a game) may further correspond to different vibration feedback effects. A touch vibration feedback effect can be further customized.

Still referring to FIG. 2, for example, the indicator 192 may be an indicator light, may be configured to indicate a charging status or a battery change, and may be further configured to indicate a message, a missed call, a notification, and the like.

The hardware structure of the electronic device 100 is not further described. It should be understood that the electronic device 100 shown in FIG. 2 is only an example. During specific implementation, the electronic device 100 may have more or fewer components than those shown in the figure, may combine two or more components, or may have different component configurations. The components shown in FIG. 2 may be implemented by hardware including one or more signal processors and/or application-specific integrated circuits, software, or a combination of hardware and software.

To better understand a software structure of the electronic device 100 shown in FIG. 2, the following describes the software structure of the electronic device 100. Before the software structure of the electronic device 100 is described, an architecture that may be used in a software system of the electronic device 100 is first described.

Specifically, in actual application, the software system of the electronic device 100 may use a layered architecture, an event-driven architecture, a microkernel architecture, a micro service architecture, or a cloud architecture.

In addition, it may be understood that a software system currently used by a mainstream electronic device includes but is not limited to a Windows system, an Android system, and an iOS system. For ease of description, an Android system with a layered architecture is used as an example in the embodiments of this application to describe the software structure of the electronic device 100.

In addition, a subsequent file management solution provided in the embodiments of this application is also applicable to another system in specific implementation.

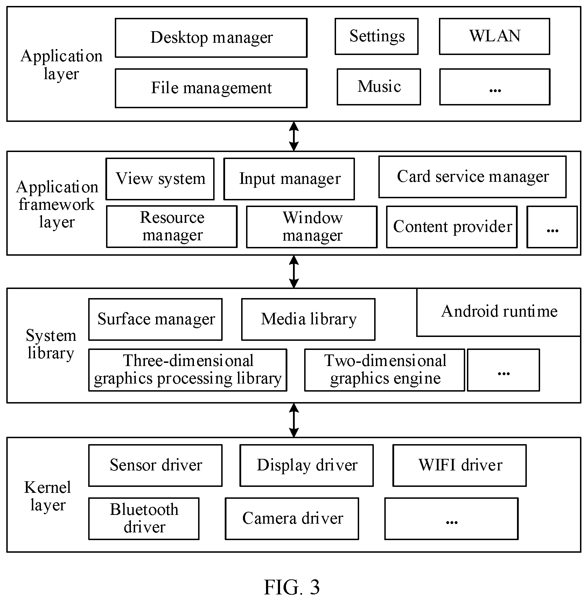

FIG. 3 is a block diagram of a software structure of the electronic device 100 according to an embodiment of this application.

As shown in FIG. 3, in the layered architecture of the electronic device 100, software is divided into several layers, and each layer has a clear role and task. The layers communicate with each other through a software interface. In some implementations, the Android system is divided into four layers, which are respectively an application layer, an application framework layer, an Android runtime (Android runtime) and system library, and a kernel layer from top to bottom.

The application layer may include a series of application packages.

As shown in FIG. 3, the application package may include applications such as a desktop manager, file management, settings, music, and WLAN, which are not listed one by one herein. This is not limited in this application. The desktop manager is configured to manage and display an icon of an application installed in the electronic device, and a card used by a user to manage a file selected by the user or an automatically recommended file described below, where the card has no icon on a home screen. The file management APP is configured to provide a user with a function of viewing various files managed by the file resource manager. The settings APP is configured to provide various user operation entries, for example, the foregoing described entry for opening the file management APP.

The application framework layer provides application programming interfaces (application programming interface, API) and programming frameworks for the applications at the application layer. In some implementations, these programming interfaces and programming frameworks may be described as functions.

As shown in FIG. 3, the application framework layer may include functions such as a view system, a content provider, a resource manager/a file resource manager, a window manager, an input manager, and a card service manager, which are not listed one by one herein. This is not limited in this application.

The view system includes a visual control, for example, a control for displaying text and a control for displaying a picture. The view system may be configured to construct an application. A display interface may include one or more views.

The content provider is configured to store and obtain data and make the data accessible to an application. The data may include a video, an image, audio, calls that are made and answered, a browsing history and bookmarks, a phone book, and the like.

The resource manager and the file resource manager may be one manage in actual application, and the resource manager is used as an example in FIG. 3. Specifically, the resource manager is configured to provide various resources for an application, for example, a localized character string, an icon, a picture, a layout file, and a video file.

The window manager is configured to manage a window program. The window manager may obtain a size of a display, determine whether a status bar exists, whether to lock a screen, whether to take a screenshot, and the like.

The input manager is configured to manage a touch event and distribute the touch event.

The card service manager is configured to receive and store card information published by an application (application, APP) on the home screen, for example, a name and a path of a file described below; and provide an interface for a home screen program to query the card information, for example, provide an interface for the desktop manager. When a user taps an icon of any file in the card in the desktop manager, the user directly finds the file based on the name and the path that are recorded in the card information, and displays the file by using a corresponding APP. For specific implementation details of the operation, refer to the following descriptions. Details are not described herein.

The Android Runtime includes a kernel library and a virtual machine. The Android Runtime is responsible for scheduling and managing the Android system.

The kernel library includes two parts: one part is a functional function that needs to be invoked by a Java language, and the other part is a kernel library of Android.

The application layer and the application framework layer are run in the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of function modules, for example, a surface manager (surface manager), a media library (Media Libraries), a three-dimensional (3D) graphics processing library (for example, OpenGL ES), and a two-dimensional 2D graphics engine (for example, SGL).

The surface manager is configured to manage a display subsystem, and provide fusion of 2D and 3D layers for a plurality of applications.

The media library supports playing and recording in a plurality of common audio and video formats, a static image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

It may be understood that, the 2D graphics engine described above is a drawing engine for 2D drawing.

In addition, it may be understood that the kernel layer in the Android system is a layer between hardware and software. The kernel layer includes at least a display driver, a camera driver, a sensor driver, a WiFi driver, a Bluetooth driver, and the like. For example, the sensor driver may be configured to output a detected signal of a sensor (for example, a touch sensor) to a view system, so that the view system displays a corresponding application interface in response to the detected signal.

The software structure of the electronic device 100 is not further described. It may be understood that the layers and the components include at the layers in the software structure shown in FIG. 3 constitute no specific limitation on the electronic device 100. In some other embodiments of this application, the electronic device 100 may include more or fewer layers than those shown in the figure, and each layer may include more or fewer components. This is not limited in this application.

Using an electronic device with the hardware structure shown in FIG. 2 and the software structure shown in FIG. 3 as an example, based on a file management method provided in an embodiment of this application, a card (referred to as a home screen card below) may be displayed on a home screen of the electronic device. The home screen card displays a file that meets a user requirement, such as a file that is recently received and downloaded, a file that is most frequently used, a file with longest use duration, a file that is suitable for a current time period, a file that is suitable for a current location, or the like, which are not listed one by one herein. This is not limited in this embodiment. In this way, a user can directly tap a file icon of a corresponding file on the home screen card to directly jump to a preview interface of the file corresponding to the tapped file icon, thereby greatly facilitating viewing by the user.

To better understand the file management method provided in this embodiment, the following describes, with reference to the accompanying drawings, the file management method provided in this embodiment from aspects of a card form, an adding manner, and an editing manner that are of a home screen card, and adding a file to or deleting a file from a home screen card, and the like.

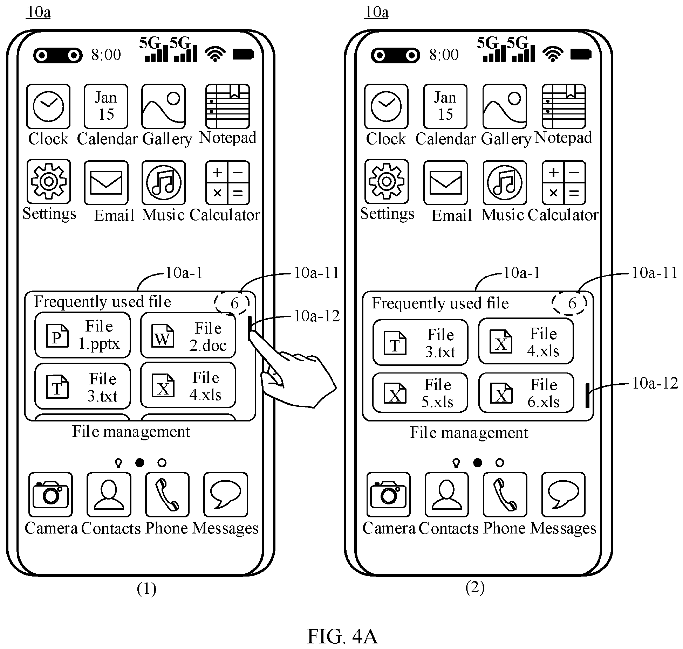

The following describes, with reference to FIG. 4A, FIG. 4B, FIG. 5A to FIG. 5C, and FIG. 6, example implementations of home screen cards in various specification forms provided in an embodiment of this application.

### Implementation 1

As shown in part (1) of FIG. 4A, an electronic device such as a mobile phone may display a home screen card 10a-1 on a home screen 10a. The home screen card 10a-1 is presented in a four-cell form with a fixed size of 2×2. Specifically, in a visual range, each row displays only two file icons, and each column displays only two file icons.

Further, to help a user quickly find more files by using the home screen card 10a-1, when a size of the home screen card 10a-1 is fixed, a file icon that is not displayed in the visual range may be viewed by sliding control. Still referring to part (1) of FIG. 4A, the home screen card 10a-1 may include a control 10a-11 used to display a quantity of files currently managed in the home screen card 10a-1, and a control 10a-12 used to slide a file icon displayed in a visual range.

Still referring to part (1) of FIG. 4A, for example, six files are currently managed in the home screen card 10a-1, such as a file 1.pptx, a file 2.doc, a file 3.txt, a file 4.xls, a file 5.xls, and a file 6.xls, that is, the user may directly view the six files by using six file icons displayed in the home screen card 10a-1. For example, when the user taps a file icon corresponding to the file 1.pptx, in response to the user operation, the mobile phone starts a default or a preset APP that is specifically used to view a file in a PPTX format, and then the APP accesses the file 1.pptx and displays content in the file 1.pptx.

Still referring to part (1) of FIG. 4A, for example, only file icons corresponding to four files, namely, the file 1.pptx, the file 2.doc, the file 3.txt, and the file 4.xls can be displayed in a current visual range of the home screen card 10a-1. When the user wants to view the file 5.xls, the user may slide the control 10a-12 downward, so that a file icon of the file 5.xls is displayed in the visual range of the home screen card 10a-1, as shown in part (2) of FIG. 4A. Correspondingly, if the user wants to view the file 2.doc, the user may slide the control 10a-12 upward, so that a file icon of the file 2.doc is displayed in the visual range of the home screen card 10a-1, as shown in part (1) of FIG. 4A.

It should be understood that, the foregoing description is only an example listed for better understanding of the technical solution in this embodiment, and is not used as a unique limitation on this embodiment.

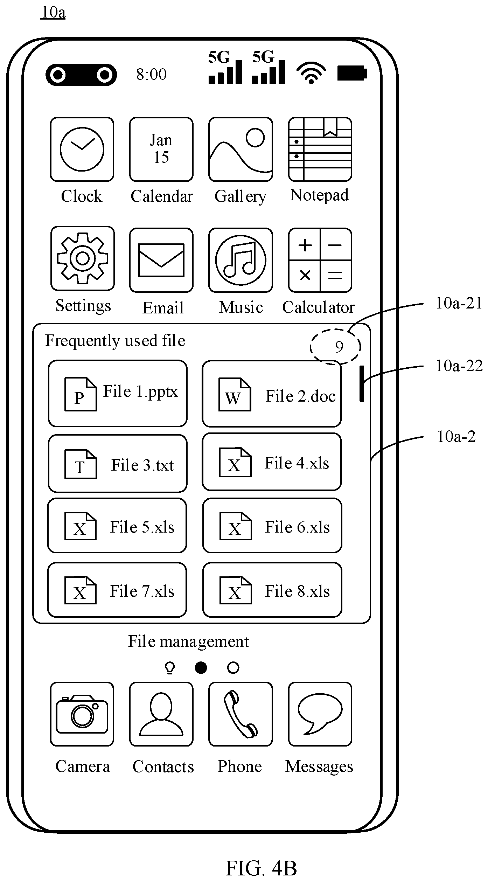

In addition, in some implementations, a card form with a fixed size may alternatively be in an eight-cell form of 4×2, such as a home screen card 10a-2 shown in FIG. 4B. The home screen card 10a-2 may include a control 10a-21 used to display a quantity of files currently managed in the home screen card 10a-2, and a control 10a-22 used to slide a file icon displayed in a visual range. In this way, file icons of eight frequently used files may be displayed in the visual range of the home screen card 10a-2, to reduce operations of sliding the control 10a-22 by a user as much as possible, thereby reducing user operations.

It should be understood that, the foregoing card forms with a fixed size are only examples for better understanding of the technical solution in this embodiment, and is not used as a unique limitation on this embodiment. In actual application, a proper home screen card may be created based on remaining space of the home screen 10a, or may be set by a user based on a personal preference. This is not limited in this embodiment.

In addition, a quantity of files that can be managed in a home screen card may also be default in a system or may be set based on a use habit of a user. This is not limited in this embodiment. In this embodiment and the following embodiments, 20 files are used as examples, that is, one home screen card can manage a maximum of 20 files.

### Implementation 2

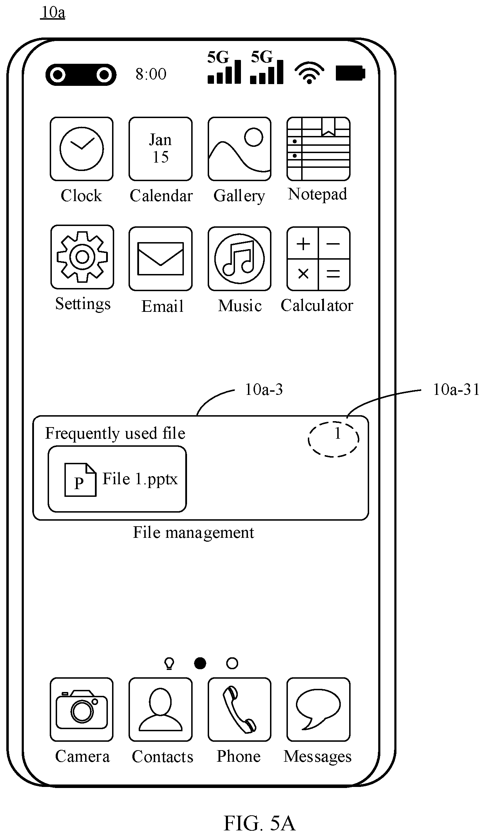

As shown in FIG. 5A, an electronic device such as a mobile phone may display a home screen card 10a-3 on a home screen 10a. A size of the home screen card 10a-3 varies in a specified range with a quantity of managed files. For example, when the managed file has only one file 1.pptx, a visual range program of the home screen card 10a-3 is in a 1×2 form, and the home screen card 10a-3 may further display a control 10a-31 of a quantity of files currently managed in the home screen card 10a-3, as shown in FIG. 5A.

For example, in an implementation, the foregoing specified range is, for example, as follows: A maximum visual range is 2×2 (as shown in FIG. 4A), a minimum visual range is 1×2 (as shown in FIG. 5A); or a maximum visual range is 4×2 (as shown in FIG. 4B), and a minimum visual range is 1×2 (as shown in FIG. 5A).

It should be understood that, the foregoing description is only an example listed for better understanding of the technical solution in this embodiment, and is not used as a unique limitation on this embodiment.

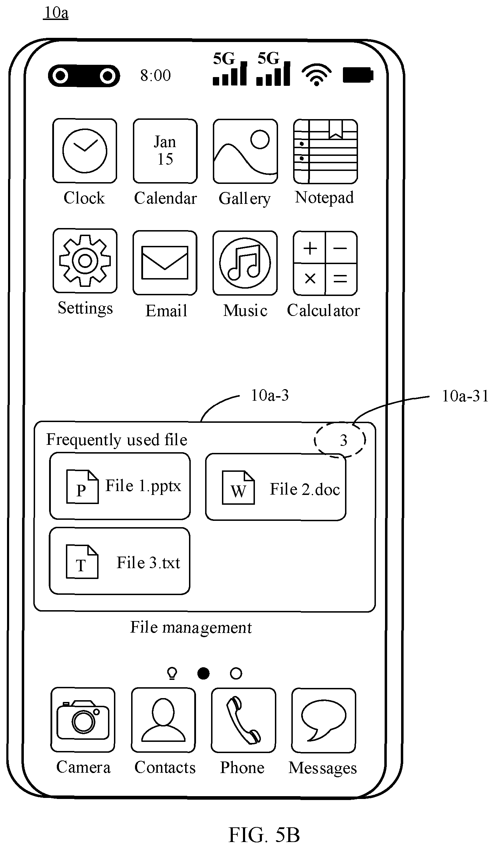

In this embodiment, that a maximum visual range is 4×2 (as shown in FIG. 4B) and a minimum visual range is 1×2 (as shown in FIG. 5A) is used as an example. For example, after a user adds a file 2.doc and a file 3.txt to the home screen card 10a-3, a quantity displayed in the control 10a-31 is changed to 3, and a card form of the home screen card 10-3 is presented in a four-cell form of 2×2 shown in FIG. 5B.

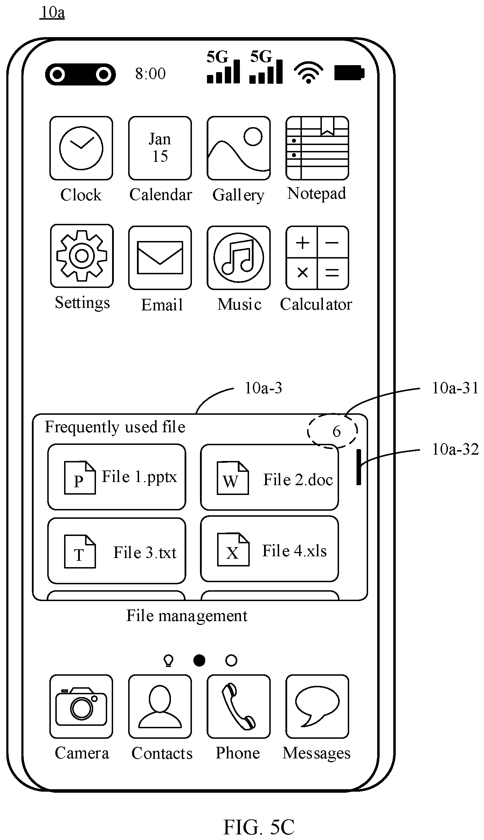

As shown in FIG. 5C, after the user subsequently continues to add a file 4.xls, a file 5.xlst, and a file 6.xls to the home screen card 10a-3, because the maximum visual range of the home screen card 10a-3 is 4×2, in this case, the home screen card 10a-3 further displays a control 10a-32 used to slide a file icon displayed in the visual range, so that the user can slide the control 10a-32 to view a file icon that is not currently displayed in the visual range. An operation manner of the control 10a-32 is the same as that of the control 10a-12 described above, and details are not described herein again.

### Implementation 3

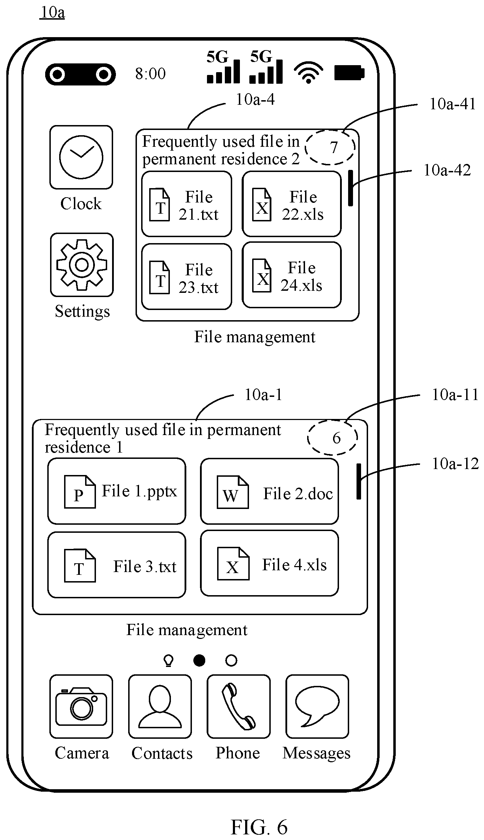

As shown in FIG. 6, an electronic device such as a mobile phone may display a home screen card 10a-1 and a home screen card 10a-4 on a home screen 10a. Card forms of the home screen card 10a-1 and the home screen card 10a-4 may be the same, or may be different. In FIG. 6, both the card forms are four-cell forms with a fixed size of 2×2.

Still referring to FIG. 6, for example, in some implementations, the home screen card 10a-4 may be connected to the home screen card 10a-1, and includes a control 10a-41 used to display a quantity of files currently managed in the home screen card 10a-4, and a control 10a-42 used to slide a file icon displayed in a visual range.

For example, in some implementations, a plurality of home screen cards displayed on the home screen 10a may be classified based on a displayed file type. For example, file icons displayed on one of the home screen cards are all file icons of files in a TXT format, and file icons displayed on the other home screen card are all file icons of files in a DOC format.

For example, in some other implementations, a plurality of home screen cards displayed on the home screen 10a may be classified based on a use location. As shown in FIG. 6, classification is performed based on a location. For example, the home screen card 10a-1 manages a file frequently used by a user in a permanent residence 1, and the home screen card 10a-4 manages a file frequently used by the user in a permanent residence 4. Files managed in home screen cards corresponding to different permanent residences may be partially the same or may be completely different. This is not limited in this embodiment.

In addition, it should be noted that, in actual application, to reduce occupation of an available area of the home screen 10a, a permanent residence in which a user is currently located may be identified, so that only a home screen card corresponding to the permanent residence is displayed on the home screen 10a. For example, when the user is located in the permanent residence 1, only the home screen card 10a-1 is displayed. Correspondingly, when the user is in the permanent residence 2, only the home screen card 10a-4 is displayed.

For example, in some other implementations, the foregoing two classification manners may alternatively be combined. For example, if a user frequently views files in a DOC format and a TXT format in the permanent residence 1, the home screen card 10a-1 may manage only a file in the DOC format that meets the specified requirement, and the home screen card 10a-4 manages only a file in the TXT format that meets the specified requirement.

It should be understood that, the foregoing description is only an example listed for better understanding of the technical solution in this embodiment, and is not used as a unique limitation on this embodiment.

It should be noted that three example home screen card forms are listed in the foregoing embodiments. It may be understood that, the embodiments of this application include but are not limited to the foregoing three home screen card forms. In actual implementation, the embodiments of this application may further support another card form, such as 3×2, similar to the foregoing three card forms. This may be specifically determined based on an actual use requirement, and is not limited in this embodiment of this application.

The foregoing embodiments of this application provide home screen cards of various specifications for selection by a user, and the user may choose, based on an actual use requirement, to add a home screen card suitable for a use habit of the user to the home screen for display. The home screen card provided in this embodiment of this application presents, to a user, various files that are stored in different paths and that have been recently used by an electronic device, or whose use frequencies meet a specified requirement, or whose use duration meets a specified requirement, or that meet a current time period, or that meet a current location, to provide a more intuitive and convenient file management form for the user.

For example, in some implementations, a display sequence of the foregoing file icons of the files managed in the home screen card displayed on the home screen 10a and a location relationship between the file icons may be fixed, for example, the file icons are displayed in an adding sequence.

For example, in some other implementations, to better improve user experience, a sequence of the file icons displayed on the home screen card may be dynamically adjusted based on a corresponding file use frequency or duration, a location, or the like. For example, in the permanent residence 1 such as a company, a sequence of the file icons displayed in the home screen card may be comprehensively adjusted based on a plurality of dimensions such as use frequencies, use duration, and use time periods that are of a user for different files and that are in a previous period of time, for example, in five consecutive working days. On a working day from 9:00 a.m. to 12:00 a.m. and from 2:00 p.m. to 6:00 p.m, when the user is in the permanent residence 1, the home screen card 10a-1 is displayed on the home screen 10a, and a file 1.pptx, a file 2.doc, a file 3.txt, and a file 4.xls whose use frequencies, use duration, and use time periods meet the specified requirement are displayed in a default visible range in the home screen card 10a-1. On a non-working day from 9:00 a.m. to 12:00 p.m. and from 2:00 p.m. to 6:00 p.m., when the user is in the permanent residence 2, the home screen card 10a-4 is displayed on the home screen 10a, and a 21.pptx, a file 22.doc, a file 23.txt, and a file 24.xls whose use frequencies, use duration, and use time periods meet the specified requirement are displayed in the default visible range in the home screen card 10a-4.

It should be understood that, the foregoing description is only an example listed for better understanding of the technical solution in this embodiment, and is not used as a unique limitation on this embodiment.

In addition, it should be further noted that, when an electronic device such as a mobile phone is in a lock screen interface and is in a screen-off standby mode, after a user taps a screen or presses a power-on button to light up the screen, as shown in FIG. 7, based on the file management method provided in this embodiment of this application, a home screen card, such as a home screen card 10b-1, in a form similar to the foregoing card form may be displayed in a lock screen interface 10b. The home screen card 10b-1 may include a control 10b-11 used to display a quantity of files currently managed in the home screen card 10b-1, and a control 10b-12 used to slide a file icon displayed in a visual range.

FIG. 7 shows an example in which nine files are managed in the home screen card 10b-1 displayed in the lock screen interface 10b. In a current visual range, visible file icons are respectively file icons corresponding to four files: a file 1.pptx, a file 2.doc, a file 3.txt, and a file 4.xls. If a user wants to view the remaining five files, the user may slide the control 10b-12 to slide, to the visual range, a file icon of a file that is not displayed currently, so as to provide the file icon for selection by the user.

It should be understood that, the foregoing description is only an example listed for better understanding of the technical solution in this embodiment, and is not used as a unique limitation on this embodiment. The card form of the home screen card displayed in the lock screen interface 10b may be any one of the foregoing. Details are not described herein again.

The following describes, with reference to FIG. 8A(1) to FIG. 8D, an example implementation of adding a home screen card according to an embodiment of this application.

In this embodiment of this application, a user may select, based on an actual use requirement, a home screen card form suitable for a use habit of the user. Correspondingly, an electronic device may display, based on a use requirement of the user, a home screen card in any of the foregoing described card forms on a home screen or in a lock screen interface, to help the user search for a file. In this embodiment, adding a home screen card to the home screen is used as an example.

Optionally, in this embodiment of this application, when no card is displayed on the home screen, the user may select, in various manners, a home screen card from a plurality of card forms preset in a system, and add the selected home screen card to the home screen.

For example, in some implementations, the user may invoke a home screen card setting interface by performing an operation on a home page of the home screen, and then the user can perform a card adding operation in the home screen card setting interface, to add a card to the home screen.

As shown in FIG. 8A(1), an electronic device such as a mobile phone receives an operation (for example, a double-finger kneading operation) performed by a user on a home screen 10a. As shown in FIG. 8A(2), the mobile phone displays, in response to the double-finger kneading operation, a plurality of controls related to the home screen 10a, such as a wallpaper setting control, a home screen card setting control, a switching effect setting control, and a home screen setting control. Further, the mobile phone receives an operation (for example, a tap operation) performed by the user on the home screen card setting control. As shown in FIG. 8A(3), the mobile phone displays the home screen card setting interface in response to the tap operation. Various types of cards are displayed in the home screen card setting interface, such as a YOYO suggestion card, a file management card, a calendar card, and a weather card, and certainly there may also be other possible cards.

When the mobile phone receives an operation (for example, a tap operation) performed by the user on the file management card, as shown in FIG. 8B(1), the mobile phone displays a card display interface 10c for file management. As shown in FIG. 8B(1), different card forms are displayed in the card display interface 10c. As shown in FIG. 8B(1), a four-cell form (which is referred to as a card form 1 below) with a fixed card size of 2×2 is displayed currently, and supports management of a maximum of 20 files.

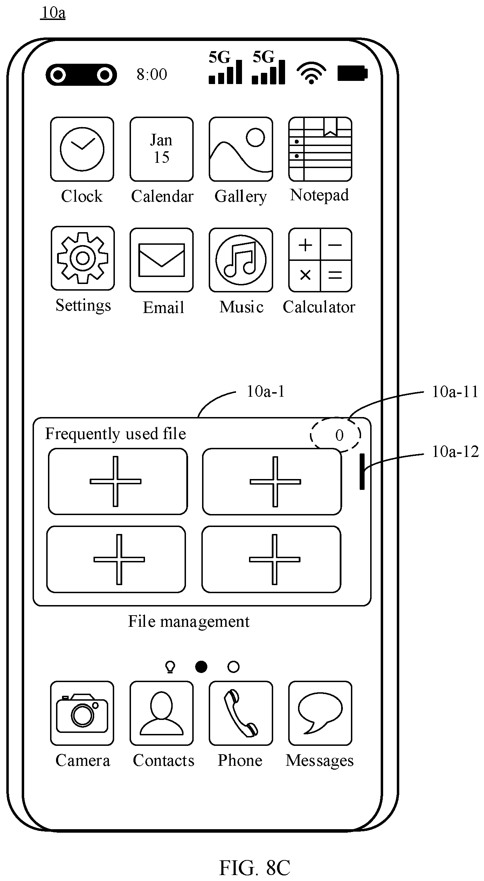

As shown in FIG. 8B(1), the card display interface 10c further displays a "Add to home screen" control 10c-1. After the user taps the control 10c-1, the mobile phone adds, to the home screen 10a in response to the tap operation of the user, a home screen card in the card form 1 shown in FIG. 8B(1), as shown in FIG. 8C. After the user adds the foregoing six files, namely the file 1.pptx, the file 2.doc, the file 3.txt, the file 4.xls, the file 5.xls, and the file 6.xls, to the home screen card, as shown in part (1) of FIG. 4A.

As shown in FIG. 8B(1) to FIG. 8B(3), the card display interface 10c further displays a control 10c-2 and a control 10c-3 that are used to switch a card form.

For example, in some implementations, the user may perform an operation in the card display interface 10c (for example, performing an operation of sliding a finger in an arrow direction or performing a tap operation on the control 10c-2) to trigger the mobile phone to update the card display interface 10c, to display a card in another form or specification.

If the mobile phone receives a sliding operation of the user shown in FIG. 8B(1), as shown in FIG. 8B(2), the mobile phone may display, in the card display interface 10c, a card (which is subsequently referred to as a card form 2) that is in an eight-cell form with a fixed card size of 4×2 and that supports management of a maximum of 20 files. If the mobile phone receives a tap operation performed by the user on the control 10c-1, the mobile phone adds, to the home screen 10a in response to the tap operation of the user, a home screen card in the card form 2 shown in FIG. 8B(2). When a file added by the user to the home screen card is greater than or equal to 8, a form of the home screen card is shown in FIG. 4B.

If the mobile phone receives a sliding operation of the user shown in FIG. 8B(2), as shown in FIG. 8B(3), the mobile phone displays, in the card display interface 10c, a card form (which is subsequently referred to as a card form 3) that is a variable form and an eight-cell form with a maximum visible range size of 4×2 and that supports management of a maximum of 20 files. If the mobile phone receives a tap operation performed by the user on the control 10c-1, the mobile phone adds, to the home screen 10a in response to the tap operation of the user, a home screen card in the card form 3 shown in FIG. 8B(3). When a file added by the user to the home screen card is greater than or equal to 8, a form of the home screen card is shown in FIG. 4B.

If the mobile phone receives a sliding operation of the user shown in FIG. 8B(3), the mobile phone may display, in the card display interface 10c, a card form (which is subsequently referred to as a card form 4) that is a variable form and a four-cell form with a maximum visible range of 2×2 and that supports management of a maximum of 20 files. If the mobile phone receives a tap operation performed by the user on the control 10c-1, the mobile phone adds a home screen card in the card form 4 to the home screen 10a in response to the tap operation of the user. After the user adds a file to the home screen card, a change of the home screen card may be shown in FIG. 5A to FIG. 5C.

It should be understood that, the foregoing description is only an example listed for better understanding of the technical solution in this embodiment, and is not used as a unique limitation on this embodiment.

Optionally, in this embodiment of this application, cards displayed in the card display interface 10c for file management may be sequentially displayed in descending order of priorities. For example, a priority of the card form 1 is higher than a priority of the card form 2, the priority of the card form 2 is higher than a priority of the card form 3, and the priority of the card form 3 is higher than a priority of the card form 4. It should be understood that, the foregoing description is only an example listed for better understanding of the technical solution in this embodiment, and is not used as a unique limitation on this embodiment.

In addition, it should be noted that, in some other implementations, the user may perform an operation on a leftmost home screen of an electronic device such as a mobile phone to invoke a home screen card setting interface, and then the user performs a card adding operation in the home screen card setting interface, to add a card to a home screen.

In addition, it should be further noted that, in some other implementations, the user may perform an operation in a system setting interface of an electronic device such as a mobile phone to invoke a home screen card setting interface, and then the user performs a card adding operation in the home screen card setting interface, to add a card to a home screen.

It may be understood that, the foregoing shows a possible manner in which the user adds a home screen card when there is no home screen card on the home screen. It may be understood that there may be another possible implementation. For example, when a home screen card is already displayed on the home screen, the user may perform an operation on the home screen card existing on the home screen to invoke a home screen card setting interface, and then the user performs, in the home screen card setting interface, an operation of adding a new home screen card to add the new home screen card to the home screen. For this manner of creating/adding a home screen card to the home screen 10a, refer to FIG. 8D.

As shown in part (1) of FIG. 8D, for example, when a home screen card 10a-4 of a file management type already exists on home screen 10a, if the user further wants to add a home screen card of the file management type to the home screen 10a, the user may touch and hold the home screen card 10a-4. After detecting the touch and hold operation performed by the user on the home screen card 10a-4, the mobile phone displays an interface 10h in response to the touch and hold operation, as shown in part (2) of FIG. 8D.

As shown in part (2) of FIG. 8D, for example, the home screen card 10a-4 and a window 10a-5 are displayed in the interface 10h. The window 10a-5 may include an "Edit card" setting option for editing the home screen card 10a-4, a "More "file management" card" setting option for creating/adding a home screen card of a new file management type, and a "Remove" setting option for removing/deleting the home screen card 10a-4.

It may be understood that, after the user taps the "More "file management" card" setting option, the mobile phone jumps, in response to the tap operation, to the interface shown in FIG. 8B(1). For an operation of adding a card by using the card display interface 10c shown in FIG. 8B(1), refer to the foregoing descriptions. Details are not described herein again.

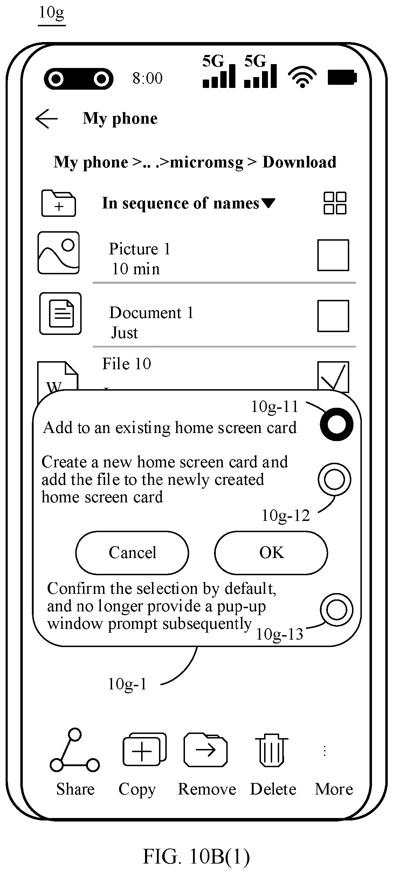

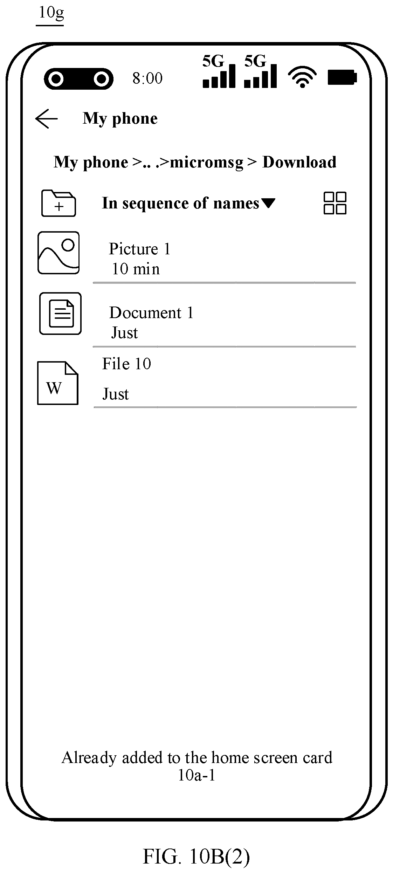

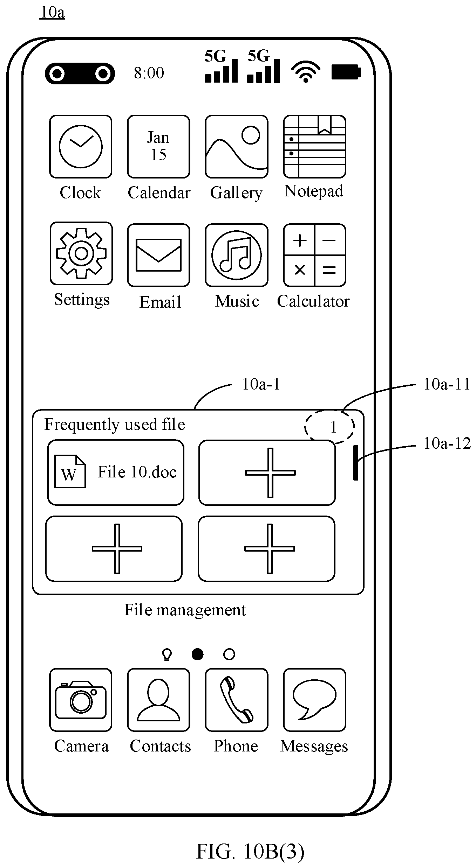

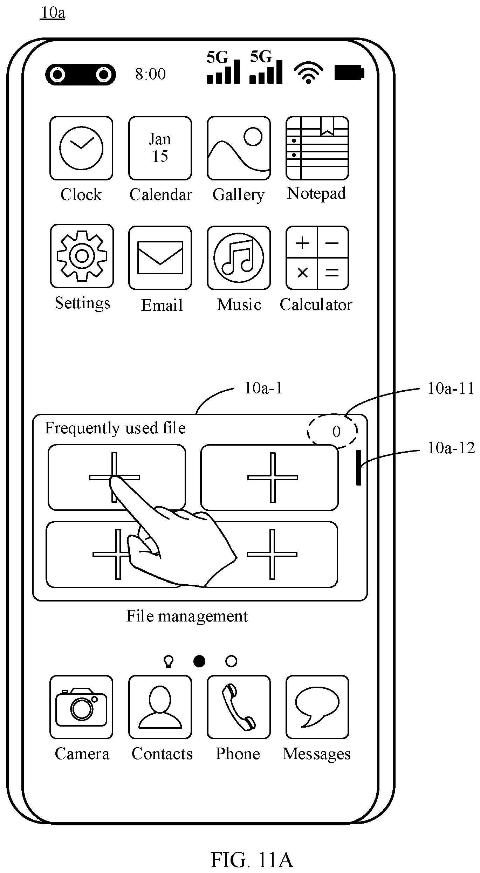

The following describes, with reference to FIG. 9A(1) to FIG. 9A(3), FIG. 9B(1) to FIG. 9B(3), FIG. 10A(1) to FIG. 10A(3), FIG. 10B(1) to FIG. 10B(3), and FIG. 11A to FIG. 11C, various example implementations of adding a file to a home screen card according to an embodiment of this application.

### Implementation 1

As shown in FIG. 9A(1), after "Zhang San" sends a file whose file format is a DOC and whose file name is "file 10" to a holder (which is subsequently referred to as a user A) of an electronic device such as a mobile phone by using a thirty-party APP such as an instant messaging APP, the user A operates the mobile phone, for example, opens the thirty-party APP to enter a chat interface 10d with "Zhang San".

Referring to FIG. 9A(1), for example, the setting interface 10d may include one or more controls. These controls include but are not limited to a control 10d-1 used to exit the chat interface 10d, a control 10d-2 used to set and search for information related to "Zhang San", a control 10d-3 that displays a profile picture of "Zhang San", and a control 10d-4 that displays content such as a message or a file sent by "Zhang San".

For example, in some implementations, after the user A taps the control 10d-1, the mobile phone exits the chat interface with "Zhang San" in response to the tap operation. After the user A taps the control 10d-2, in response to the tap operation, interfaces that the mobile phone jumps to may include an option for searching for historical chat content, an option for setting a mute notification on a message sent by "Zhang San", an option for setting a reminder on a message sent by "Zhang San", an option for setting a chat background with "Zhang San", and an option for clearing a chat record, which are not listed one by one herein. This is not limited in this embodiment. After the user A taps the control 10d-3, the mobile phone may jump to a details interface about "Zhang San" in response to the operation behavior. For example, the details interface may include a phone number, label information, and permission information of "Zhang San", which are not listed one by one herein. This is not limited in this embodiment.

Still referring to FIG. 9A(1), for example, when the user A performs an operation (such as a touch and hold operation or a tap operation) on the control 10d-4, the mobile phone transfers from the chat interface 10d to an interface 10e in response to the operation behavior of the user A, as shown in FIG. 9A(2). The interface 10e may include one or more controls. These controls include but are not limited to a control 10e-1 used to exit the interface 10e, a control 10e-2 used to view more setting options, and a control 10e-3 used to receive or store a file.

For example, in some implementations, after the user A taps the control 10e-1, the mobile phone exits the interface 10e in response to the tap operation, that is, returns to the chat interface 10d with "Zhang San". After the user A taps the control 10e-2, the mobile phone may pop up, in response to the tap operation, a function window that provides another setting option. For example, the window may include a "Send to friend" option, a Favorites option, and the like, which are not listed one by one herein. This is not limited in this embodiment.

In addition, in the interface 10e, a size of the file 10.doc currently to be received may also be displayed, for example, 30.21 KB shown in FIG. 9A(2).

Still referring to FIG. 9A(2), for example, when the user A performs an operation such as a tap operation on the control 10e-3, after the mobile phone stores the file 10.doc in a corresponding path in file management of the thirty-party APP in response to the operation behavior of the user A, as shown in FIG. 9A(3), in a feasible manner, the mobile phone directly jumps to a preview interface 10f provided by the thirty-party APP, and displays content in the file 10.doc in the preview interface 10f.

It should be noted that, in actual application, after the user taps the control 10e-3, in a process of downloading and locally storing the file 10.doc in response to the tap operation, the mobile phone may further display a storage path of the file 10.doc through a pop-up window in the interface 10e, and the pop-up window automatically disappears after specified time such as 3s. In this way, interface content is not shielded, and it is also helpful for the user A to learn an actual storage path of the file 10.doc, and further find the file 10.doc in the storage path.

In addition, it should be further noted that, in some implementations, when the user A presets a function of opening a file by using another application, after storing the file 10.doc in the corresponding path in file management of the thirty-party APP, the user A may directly start a specified application, and the application displays the content in the file 10.doc. In this embodiment, directly jumping to the preview interface 10f provided by the thirty-party APP and displaying the content in the file 10.doc in the preview interface 10f is used as an example.

Still referring to FIG. 9A(3), for example, the preview interface 10f includes one or more controls. These controls include but are not limited to a control 10f-1 used to exit the preview interface 10f, a control 10f-2 used to view more setting options, and a control 10f-3 used to add the file 10.doc to a home screen card.

For example, in some implementations, after the user A taps the control 10f-1, the mobile phone exits the preview interface 10f in response to the tap operation. After the user A taps the control 10f-2, the mobile phone may pop up, in response to the tap operation, a function window that provides another setting option. For example, the window may include a "Send to friend" option, a Favorites option, and the like, which are not listed one by one herein. This is not limited in this embodiment.

In addition, it should be noted that, the control 10f-3 displayed in the preview interface 10f shown in FIG. 9A(3) may be a floating ball in actual application, and automatically pops up after the interface 10e is switched to the preview interface 10f. An initial state is a folded state, that is, a style shown in FIG. 9A(3). In this way, viewing the content in the file 10.doc by the user A is not disturbed. When the file 10.doc needs to be added to a home screen card, an operation (such as a touch and hold operation or a tap operation) is performed on the control 10f-3, the mobile phone responds to the operation behavior of the user A, and the control 10f-3 is switched to an unfolded state, for example, a style shown in FIG. 9B(1).

Referring to FIG. 9B(1), for example, when the control f-3 is in the unfolded state, an "Add to home screen card" option used to add a current file, such as the file 10.doc may be provided. When the user A performs an operation (such as a touch and hold operation or a tap operation) on the "Add to home screen card" option, in response to the operation behavior of the user A, the mobile phone invokes a corresponding service, instance, or function function/interface to obtain related information of the file 10.doc from the storage path in which the file 10.doc is located, generates a corresponding file icon, adds the file icon to the home screen card, and establishes a shortcut between the file icon and the storage path of the file 10.doc.

For example, in some implementations, after the user A performs an operation on the "Add to home screen card" option, to prevent the user A from continuing to browse the content in the file 10.doc in the preview interface 10f, the control 10f-3 may change from the unfolded state shown in FIG. 9B(1) to the folded state shown in FIG. 9B(2).

In addition, to enable the user A to learn whether the current operation of adding the file 10.doc to the home screen card succeeds, after completing the foregoing processing to add the file 10.doc to the home screen card, for example, to the home screen card 10a-1 described above, the mobile phone may further pop up, in the preview interface 10f, prompt information indicating that the addition succeeds, for example, "Already added to the home screen card 10a-1" shown in FIG. 9B(2). Correspondingly, to prevent the user A from continuing to browse the content in the file 10.doc in the preview interface 10f, the prompt information popped up may disappear automatically after specified time such as 3s.

Referring to FIG. 9B(3), for example, if the user A has created/added the home screen card 10a-1 to the home screen 10a, before the file 10.doc is added to the home screen card 10a-1, if no file is added to the home screen card 10a-1, that is, a quantity of managed files is 0, a style of the home screen card 10a-1 may be shown in FIG. 8C. When the user A performs an operation on the "Add to home screen card" option, after the mobile phone adds the file 10.doc to the home screen card 10a-1 in response to the user operation, the style of the home screen card 10a-1 may be shown in FIG. 9B(3).

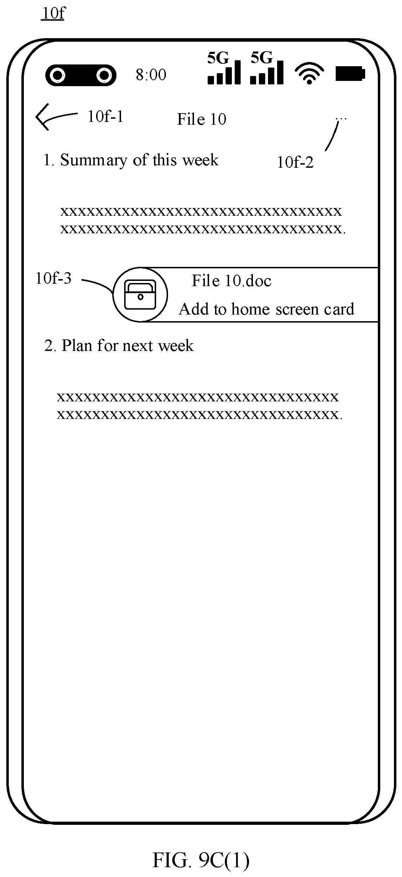

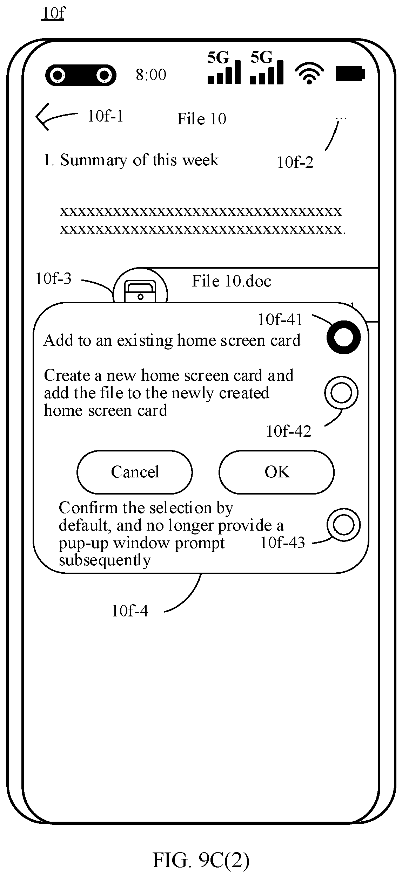

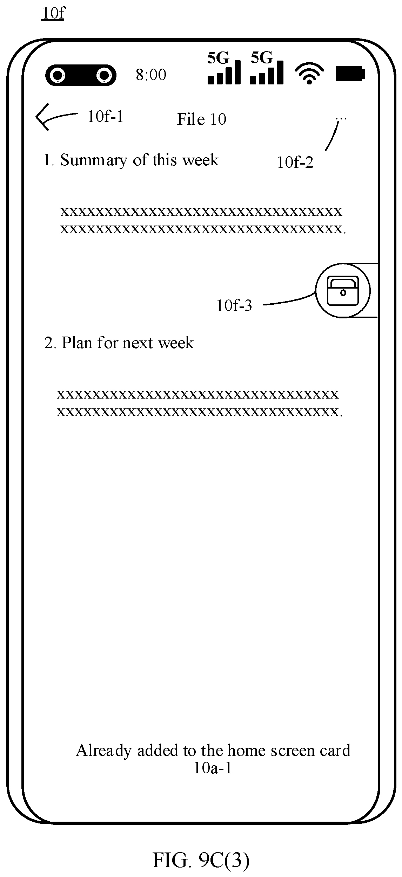

In addition, it should be further noted that, in actual application, there may be a case in which no home screen card is added to the home screen 10a, or the user A wants to add a current file to another home screen card. To better meet a use requirement of the user A, after the control 10f-3 is in the unfolded state shown in FIG. 9C(1), and the user A performs an operation on the "Add to home screen card" option, the mobile phone may pop up a window 10f-4 in the preview interface 10f in response to the operation behavior of user, as shown in FIG. 9C(2). The window 10f-4 may include one or more controls. These controls include but are not limited to a control 10f-41 used to choose to add a current file to an existing home screen card, a control 10f-42 used to choose to create a new home screen card and add a current file to the newly created home screen card, a control 10f-43 used to confirm selection of the user A by default and no longer provided a pup-up window prompt subsequently, a "Cancel" button used to cancel current selection and an "OK" button used to determine current selection. It should be noted that, only one of the control 10f-41 and the control 10f-42 can be selected at a same moment.

For example, when the control 10f-41 is in a selected state (a state shown in FIG. 9C(2), and the control 10f-42 and the control 10f-43 are in an unselected state (a state shown in FIG. 9C(2), if the user A taps the "OK" button, the mobile phone responds to the operation behavior, the window 10f-4 disappears, and the file 10.doc is added to the existing home screen card 10a-1 based on the foregoing processing procedure of adding the file 10.doc to the home screen card 10a-1. Correspondingly, after the file 10.doc is added to the home screen card 10a-1, prompt information pops up in the preview interface 10f, and the control 10f-3 changes to the folded state, as shown in FIG. 9C(3).

For example, when the control 10f-41 is in a selected state (a state shown in FIG. 9C(2), and the control 10f-42 and the control 10f-43 are in an unselected state (a state shown in FIG. 9C(2), if the user A taps the "OK" button, the mobile phone responds to the operation behavior, the window 10f-4 disappears, and the preview interface 10f returns to the style shown in FIG. 9C(1).

In addition, it should be noted that, if the user A does not perform an operation on the "Add to home screen card" option when the control 10f-3 is in the unfolded state, after specified time such as 5s, or after the user taps another area of the preview interface 10f, the control 10f-3 may change from the unfolded state to the folded state.

In addition, it should be further noted that, after the user exits the preview interface 10f, the control 10f-3 automatically disappears. When the user opens another file, such as a file 11.xls, a control 10f-3 used to add the file 11.xls to a home screen card may be popped up in a preview interface corresponding to the file 11.xls, that is, controls 10f-3 popped up in different preview interfaces correspond to files displayed in the preview interfaces.

In addition, it may be understood that, there are a plurality of home screen cards, such as at least two home screen cards, on the home screen 10a, there may also be two controls 10f-41 that are provided in the window 10f-4 and that are used to choose to add to an existing home screen card, that is, each home screen card corresponding to one control 10f-41. In this way, after the user presses the "OK" button, the mobile phone may add the file 10.doc to a corresponding home screen card.

For example, in some other implementations, when the user A selects the control 10f-42 (for example, a style of the control 10f-41 shown in FIG. 9C(2), and the control 10f-41 and the control 10f-43 are in an unselected state, if the user A taps the "OK" button, the mobile phone may jump, in response to the operation behavior, from the current interface to the interface shown in FIG. 8B(1), perform an operation of adding a home screen card to the home screen 10a, and after adding the new home screen card to the home screen, add the file 10.doc to the newly created home screen card based on the foregoing processing procedure of adding a file to a home screen card. For specific details of adding a home screen card and adding a file to a home screen card, refer to the foregoing descriptions. Details are not described herein again.

For example, when the user A selects the control 10f-42 (for example, a style of the control 10f-41 shown in FIG. 9C(2), and the control 10f-41 and the control 10f-43 are in an unselected state, if the user A taps the "OK" button, the mobile phone responds to the operation behavior, the window 10f-4 disappears, and the preview interface 10f restores to the style shown in FIG. 9C(1).

For example, in some other implementations, when the user A selects the control 10f-1 or the control 10f-2, and also selects the control 10f-3, if the user A taps the "OK" button, in response to the operation behavior, the mobile phone performs an operation based on the foregoing processing procedure performed when the "OK" button is tapped after the control 10f-1 or the control 10f-2 is selected, and records the current selection of the user A. When adding another file by using the thirty-party APP, after an operation is performed on the "Add to home screen card" option in the control 10f-3, the mobile phone performs a procedure of directly adding the file to an existing home screen card based on the recorded content, or performs a procedure of creating a new home screen card and adding the file to the newly created home screen card, without popping up the window 10f-4 again in the preview interface f.

It should be understood that, the foregoing description is only an example listed for better understanding of the technical solution in this embodiment, and is not used as a unique limitation on this embodiment.

In this way, when the user A subsequently wants to view the content in the file 10.doc, the user A does not need to open the foregoing thirty-party APP again to find a chat record with "Zhang San" and then tap the control 10d-4, and does not need to remember the storage path of the file 10.doc to search for the file 10.doc by opening the corresponding path level by level, but directly performs an operation, such as a tap, on the file icon corresponding to the file 10.doc displayed in the home screen card, and in response to the operation behavior, the mobile phone can directly open the file 10.doc by using a specified application, to help the user view the content in the file 10.doc.

It should be understood that, the foregoing manner of adding a preview file to a home screen card by using the control 10f-3 provided in the preview interface of the thirty-party APP is merely an example listed for better understanding of the technical solution in this embodiment, and is not used as a unique limitation on this embodiment. In actual application, a file may alternatively be added to a home screen card in another manner, such as a second implementation and a third implementation described below. For specific details of the second implementation and the third implementation, refer to the following descriptions.

In addition, it should be further noted that, in actual application, to better meet a user use requirement of a user and improve user experience, when the control f-3 is in the unfolded state, the following options may be further provided: a share option may be further provided, that is, a function option used to share a current file with another user by using another application; and a save as option, that is, a function option used to copy a current file from a default storage path and store a copied file in a path specified by a user, and the like, which are not listed one by one herein. This is not limited in this embodiment.

For example, after performing an operation on the share option, a panel that is used by the user A to select an application that may be used to share a file may pop up; and after the user A performs an operation on the save as option, an interface for selecting a storage path may be switched to. Specific implementation corresponding to the foregoing options is not limited in this embodiment.

### Implementation 2

For example, in some implementations, a frequently used file that has been stored in an electronic device such as a mobile phone may be accessed level by level by using a file management APP, to add the frequently used file to a home screen card on a home screen. For example, a storage path of a file 10.doc is "My phone >Android>Data>com.tencent.mm>MicroMsg>Download". When the user wants to add the file 10.doc in the path to a home screen card, as shown in FIG. 1A to FIG. 1E and FIG. 10A, the user may first tap an icon of the file management APP on the home screen to enter an interface of the file management APP, then tap a "My phone" folder, and then access a directory Android>Data>com.tencent.mm>MicroMsg>Download (not all levels of directories are shown in FIG. 1D) level by level. The user can see an icon (as shown in FIG. 10A(1) of the file 10.doc in a Download folder, and then the user can perform an operation on the file 10.doc.

Referring to FIG. 10A(1), for example, in some implementations, the mobile phone receives an operation (for example, a tap operation or a touch and hold operation) on the icon corresponding to the file 10.doc, and the mobile phone displays a plurality of file-related controls in response to the operation behavior, as shown in FIG. 10A(2), for example, each file corresponds to a check box control, so that the user selects the file. For another example, a share control, a copy control, a move control, a delete control, and a more option control are displayed.

For example, in some implementations, after the user taps the share control, a sharing panel may pop up, so that the user selects an application used to share a file; after the user taps the copy control, a selected file may be copied from the path, and then a copied file is added to a specified path through a user operation, for example, a touch and hold operation, after another application is opened; after the user taps the move control, an interface for selecting a folder to move may be displayed for the user to select; and after tapping an operate control, the user may delete a file selected by using a check box, where a check box corresponding to the file 10.doc shown in FIG. 10A(2) is in a selected state, and check boxes corresponding to a file 1 and a picture 1 is in an unselected state.

Still referring to FIG. 10A(2), for example, when the user performs an operation (such as a touch and hold operation or a tap operation) on the more option control, the mobile phone pops up, in response to the operation behavior, a window that includes more options in the interface 10g, as shown in FIG. 10A(3). The window may include one or more controls. These options include but are not limited to a "Favorites" option, a "Rename" option, a "Details" option, a "Compress" option, a "Move to security cabinet" option, an "Add to home screen" option, and an "Open with another application" option, and the like, which are not listed one by one herein. This is not limited in this embodiment.

Optionally, in response to an operation performed by the user on the "Favorites" option, the mobile phone may collect a file selected from the interface 10g by using a check box, such as a file 10.doc shown in FIG. 10A(3), to a folder in a specified path.

Optionally, in response to an operation performed by the user on the "Rename" option, the mobile phone may pop up a rename interface, so that the user can rename a selected file, for example, rename a file name of the file 10.doc.

Optionally, in response to an operation performed by the user on the "Details" option, the mobile phone may pop up a details interface corresponding to a selected file. For example, the details interface may display, for example, a file format, a file size, receiving time, and the like of the file, which are not listed one by one herein. This is not limited in this embodiment.

Optionally, in response to an operation performed by the user on the "Compression" option, the mobile phone may compress a selected file in a compression manner supported by the mobile phone.

Optionally, in response to an operation performed by the user on the "Move to security cabinet" option, the mobile phone may move a selected file to a folder for which a key is set to ensure the security of the file.

Optionally, in response to an operation performed by the user on the "Open with another application" option, the mobile phone may pop up a panel for selecting another application, so that the user can select an application installed on the mobile phone to open a selected file.

It should be understood that, the foregoing description is only an example listed for better understanding of the technical solution in this embodiment, and is not used as a unique limitation on this embodiment. Specific content provided by interfaces corresponding to the foregoing function options and a triggering procedure are not limited in this embodiment.

Optionally, in response to an operation performed by the user on the "Add to home screen" option, as shown in FIG. 10B(1), the mobile phone may pop up a window 10g-1 in the interface 10g. Functions and operation manners of controls and buttons in the window 10g-1 are similar to those in the foregoing window 10f-4. For specific details, refer to the foregoing descriptions. Details are not described herein again.

In addition, it may be understood that, in some implementations, the mobile phone may not pop up the window 10g-1 in response to an operation performed by the user on the "Add to home screen" option. As shown in FIG. 10B(2), the mobile phone directly adds a selected file to a home screen card in the foregoing manner of adding a file to a home screen card, and after succeeds in the addition, proves a prompt in the interface 10g, for example, "Already added to the home screen card 10a-1".

Correspondingly, when no other file is added to the home screen card 10a-1, after the file 10.doc is added to the home screen card 10a-1 in this manner, a style of the home screen card 10a-1 is shown in FIG. 10B(3). In this way, when the user subsequently wants to view the file again, the user does not need to search the file management APP for the file based on the path, but can quickly open, by directly using the home screen card 10a-1, the file that needs to be viewed.

It should be understood that, the foregoing description is only an example listed for better understanding of the technical solution in this embodiment, and is not used as a unique limitation on this embodiment.

### Implementation 3

For example, in some implementations, a user may alternatively perform an operation by using a home screen card added to the home screen 10a to add a file to the home screen card.

As shown in FIG. 11A, for example, in some implementations, each area in which a file icon can be displayed on the home screen card can be set to directly open a file management APP, such as a shortcut of a "File management" interface show in FIG. 1A. When the user taps any area that is in the home screen card 10a-1 and that is used to display a file icon, the user may directly jump to the "File management" interface in FIG. 1B, so that the user finds a corresponding file based on a storage path of the file that needs to be added, and further selects the file and adds the file to the home screen card 10a-1. In this way, when the user subsequently wants to view the file again, the user does not need to search the file management APP for the file based on the path, but can quickly open, by directly using the home screen card 10a-1, the file that needs to be viewed.

It may be understood that, for the adding manner shown in FIG. 11A, if a file icon of an added file has been displayed at each location at which a file can be added in a current visual range of the home screen card 10a-1, the user may slide the control 10a-12 to find an area that is used for displaying a file icon for the user but displays no file icon, and then perform an operation in the area to add a file.

It should be understood that, the foregoing description is only an example listed for better understanding of the technical solution in this embodiment, and is not used as a unique limitation on this embodiment.

As shown in FIG. 11B, for example, in some other implementations, to further reduce user operations, for example, an operation of sliding the control 10a-12 to search for an area that may be tapped to add a file, a control 10a-13 that is used to add a file may be fixed at a location on the home screen card 10a-1, for example, at a lower right corner shown in FIG. 11B. In this way, when files managed in the home screen card 10a-1 does not reach a maximum quantity, such as 20 files, corresponding to the files, each time the user adds a file to the home screen card 10a-1, the user can directly perform an operation on the control 10a-13 to directly jump to the "File management" interface in FIG. 1B, and then select a proper file to add based on the foregoing operation.

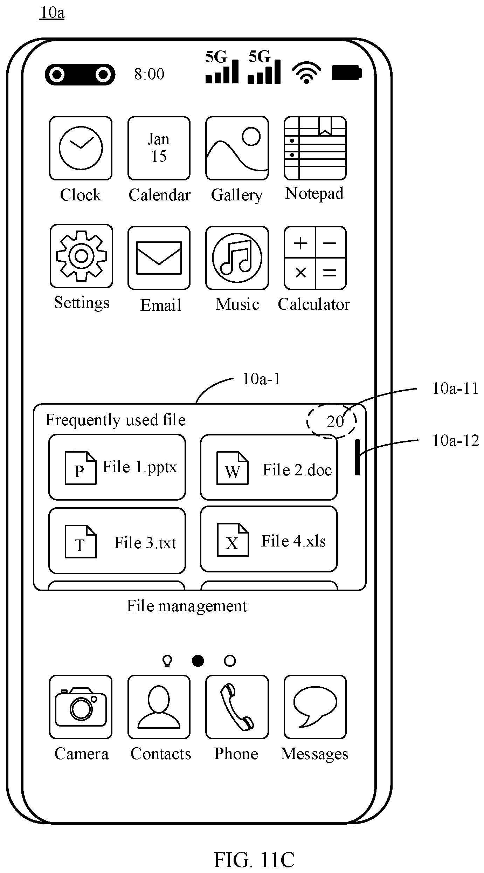

In addition, it should be noted that, in some other implementations, after 20 files are added to the home screen card 10a-1 by using the control 10a-13 shown FIG. 11B, to avoid that the user adds a file to the home screen card again 10a-1 by using the control 10a-13, but a quantity of files that are allowed to be added to the home screen card 10a-1 exceeds a limit, and consequently, the file fails to be added, the user performs a repeated operation, and user experience is affected, and a control 10a-13 may be canceled when a quantity of files added to the home screen card 10a-1 reaches 20, as shown in FIG. 11C.

It should be understood that, the foregoing description is only an example listed for better understanding of the technical solution in this embodiment, and is not used as a unique limitation on this embodiment.

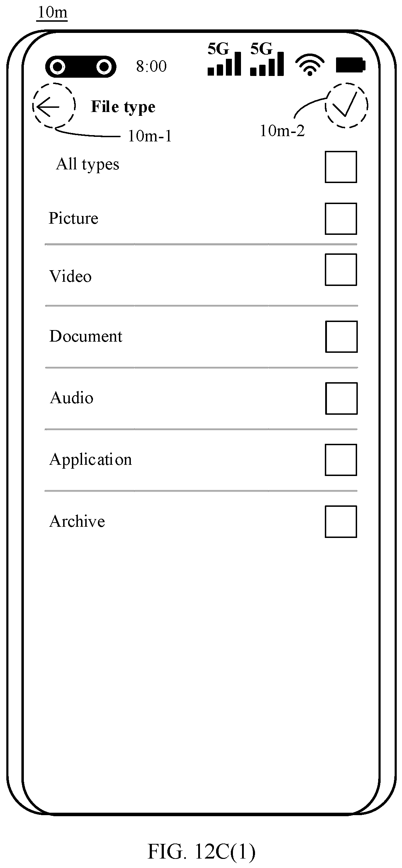

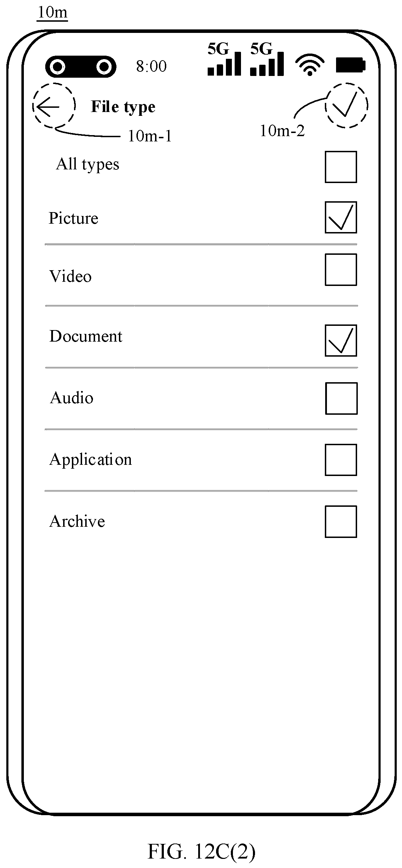

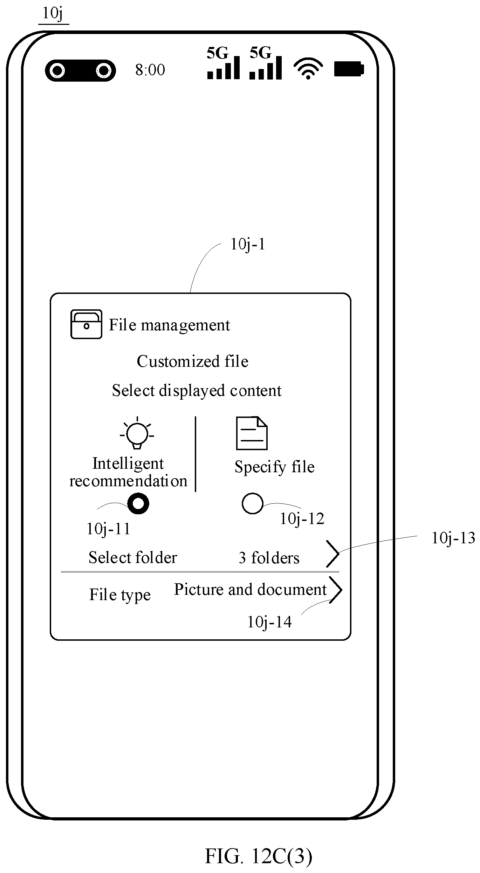

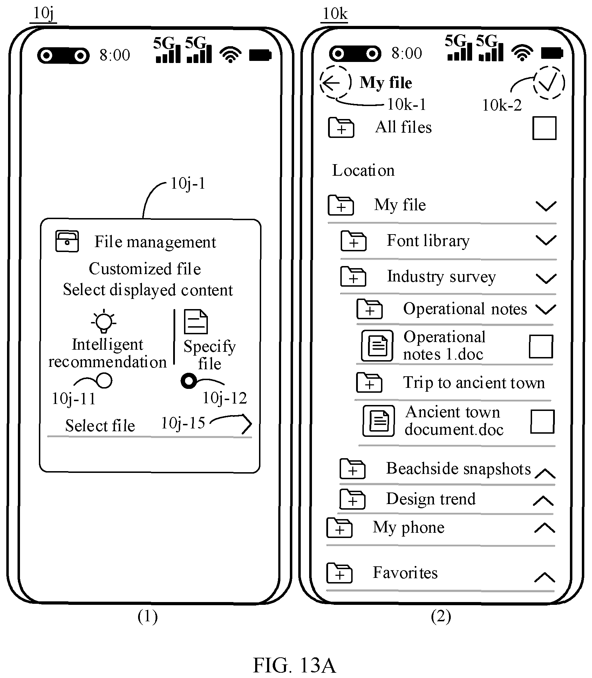

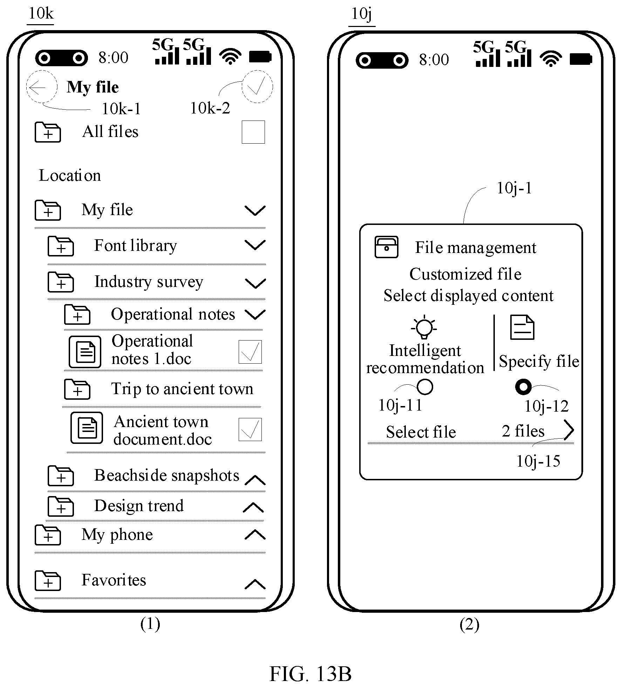

The following describes, with reference to FIG. 12A(1) to FIG. 12C(3) and FIG. 13A and FIG. 13B, various example implementations of editing a home screen card according to an embodiment of this application.

It may be understood that, the foregoing provided implementation of adding a file to a home screen card is specifically as follows: A user actively selects a file that needs to be managed in a home screen card, and adds the file to the home screen card. In another implementation, a file managed in a home screen card may alternatively be automatically selected based on a historical use habit of a user, such as a use frequency, use duration, a use time period, and a use location, or the like of the file, and added to the home screen card. In this way, the user does not need to select files one by one for addition, and only needs to set a file range and a file type in an intelligent recommendation manner by editing an entry of a home screen card.

In addition, it should be noted that, the editing a home screen card in this embodiment specifically means setting the home screen card to start an automatic file adding process.

For ease of understanding, in this embodiment, that there are an "intelligent recommendation" manner and a "specify file" manner at a setting entry for editing a home screen card is used as an example. The "intelligent recommendation" manner means that after a user adds a desktop control to a home screen, a mobile phone may automatically select, from a plurality of folders in a specified directory, a specified quantity of files, such as 20 files, that meet requirements in a plurality of dimensions such as a use frequency, use duration, a use time period, and a use location, and add the files to the home screen card. The "specify file" manner means that after a user adds a desktop control to a home screen, a mobile phone may autonomously select one or more files from a folder specified by the user and add the file to the home screen card.

A process of editing a home screen card in the "intelligent recommendation" manner and the "specify file" manner is described below with reference to accompanying drawings.

As shown in FIG. 12A(1), when the user performs an operation, such as a touch and hold operation, on a home screen card 10a-1, the mobile phone pops up an interface 10i on a home screen 10a in response to the operation behavior, as shown in FIG. 12A(2). The interface 10i displays the home screen card 10a-1 and a window 10i-1.

Referring to FIG. 12A(2), for example, the window 10i-1 may include an "Edit card" setting option 10i-11 for editing the home screen card 10a-1, a "More "file management" card" setting option for creating/adding a home screen card of a new file management type, and a "Remove" setting option for removing/deleting the home screen card 10a-1.

Optionally, after the user taps the "More "file management" card" setting option, the mobile phone jumps, in response to the tap operation, to the interface shown in FIG. 8B(1). For an operation of adding a card by using the card display interface 10c shown in FIG. 8B(1), refer to the foregoing descriptions. Details are not described herein again.

Optionally, after the user taps the "Remove" setting option, in response to the tap operation, the mobile phone removes the home screen card 10a-1 displayed on the home screen 10a from the home screen 10a. It may be understood that, if a file is added to the home screen card 10a-1, a shortcut entry of the file managed in the home screen card 10a-1 is also deleted, that is, the user cannot directly find, from the home screen, the file previously managed on the home screen card 10a-1, and needs to search for the file based on a storage path level by level by using a file management APP.

Optionally, after the user taps the "Edit card" setting option 10i-11, the mobile phone switches to an interface 10j in response to the tap operation, as shown in FIG. 12A(3). The interface 10j displays a window 10j-1 used to select "intelligent recommendation" manner or the "specify file" manner described above.

Still referring to FIG. 12A(3), for example, the window 10j-1 may include one or more controls. These controls include but are not limited to a control 10j-11 used to select the "intelligent recommendation" manner, and a control 10j-12 used to select the "specify file" manner.

It may be understood that, in some implementations, one of the foregoing two manners may be set as a default manner. For example, that the "intelligent recommendation" manner is set as a default manner is used as an example in (3) in 13A. In this case, a "Select folder" 10j-13 and a "File type" entry 10j-14 entry that correspond to the "intelligent recommendation" manner are further displayed in the window 10j-1.

For example, after the user taps the "Select folder" entry 10j-13, the mobile phone enters a "My File" interface 10k in response to the operation behavior, as shown in FIG. 12B(1). The interface 10k includes one or more controls. These controls include but are not limited to a control 10k-1 used to exit the interface 10k, a control 10k-2 used to store settings of the user in the interface 10k, and a check box used to select each folder.

Referring to FIG. 12B(1), for example, the interface 10k includes three folders that belong to a level-1 directory: "My file", "My phone", and "Favorites", and the three folders may further include several folders that belong to a level-2 directory. In this embodiment, a file that is set in the "intelligent recommendation" manner is from the folder "My file".

Still referring to FIG. 12B(1), for example, the file "My file" includes four folders that belong to a level-2 directory: "Font library", "Industry survey", "Beachside snapshots", and "Design trend", and the folder "Industry survey" further includes two files that belong to a level-3 directory: "Operational notes" and "Trip to ancient town".

For example, after the user selects check boxes corresponding to the two folders "Font library" and "Industry survey", as shown in FIG. 12B(2), the mobile phone selects, in response to the operation behavior, the two folders "Operational notes" and "Trip to ancient town" in the two folders "Font library" and "Industry survey". If the user then taps the control 10k-2, in response to the operation behavior, the mobile phone stores information about the folder selected by the user, returns to the interface 10j, and displays, in an area corresponding to the "folder selection" entry 10j-3 in the interface 10j, a quantity of folders selected the user, for example, "3 folders" shown in FIG. 12B(3).

It may be understood that in actual application, if the user wants to set a source of a file to all files, the user may directly select a check box corresponding to "All files", to select all files displayed in the interface 10k and folders included in these folders.

It should be understood that, the foregoing description is only an example listed for better understanding of the technical solution in this embodiment, and is not used as a unique limitation on this embodiment.

Still referring to FIG. 12B(3), for example, after the user taps the "File type" entry 10j-14, the mobile phone enters a "File type" interface 10m in response to the operation behavior. As shown in FIG. 12C(1). The interface m includes one or more controls. The controls include but are not limited to a control 10m-1 used to exit the interface 10m, a control 10m-2 used to store settings of the user in the interface 10m, and a check box used to select a file type of a file that is subsequently automatically added to the home screen card 10a-1.

Still referring to FIG. 12B(1), for example, the interface 10m provides file types such as a picture type, a video type, a document type, an audio type, an application type, and an archive type. In some implementations, if the user selects only several file types, the user may directly perform an operation on a check box corresponding to a file type that needs to be selected. As shown in FIG. 12C(2), the picture type and the document type are selected. In some other implementations, if the user does not restrict a file type of a file added to the home screen card 10a-1, the user may directly select, by using the check box corresponding to "All types" displayed in the interface 10m, all the file types provided in the interface m.

Correspondingly, after selecting the file type, the user may tap the control 10m-2. In response to the tap operation, as shown in FIG. 12C(3), the mobile phone stores information about the file type selected by the user, returns to the interface 10j, and displays, in an area corresponding to the "File type" entry 10j-4 in the interface 10j, the file type selected by the user, for example, "Picture and document" as shown in FIG. 12C(3).

It may be understood that, the picture type described above includes but is not limited to JPG, PNG, BMP, GIF, RAW, and the like; the video type includes but is not limited to MP4, AVI, MOV, RMVB, MKV, and the like; the document type includes but is not limited to DOC, PPT/PPTX, XLS, TXT, PDF, EPUB, and the like; the audio type includes but is not limited to MP3, WAV, M4A, FLAC, AAC, and the like; the application includes but is not limited to a system APP, such as settings, messages, phone, and a thirty-party APP, such as an instant messaging APP; and the archive includes but is not limited to ZIP, RAR, 7Z, and the like.

It should be understood that, the foregoing description is only an example listed for better understanding of the technical solution in this embodiment, and is not used as a unique limitation on this embodiment.

Referring to part (1) of FIG. 13A, for example, when the user selects the "specify file" manner, the "Select folder" entry 10j-13 and the "File type" entry 10j-14 corresponding to the "intelligent recommendation" manner are canceled, and a "Select file" entry 10j-5 corresponding to the "specify file" manner is displayed. In this manner, because the user directly specifies a file to be added, an entry for setting a file type does not need to be provided.

Still referring to part (1) of FIG. 13A, for example, after the user taps the "Select file" entry 10j-5, the mobile phone enters a "My File" interface 10k in response to the operation behavior, as shown in part (2) of FIG. 13A. The interface 10k includes one or more controls. These controls include but are not limited to a control 10k-1 used to exit the interface 10k, a control 10k-2 used to store settings of the user in the interface 10k, and a check box used to select each folder.

Referring to part (2) of FIG. 13A, for example, the interface 10k includes three folders that belong to a level-1 directory: "My file", "My phone", and "Favorites", and the three folders may further include several folders that belong to a level-2 directory. Each folder in the level-2 directory may include several folders that belong to a level-3 directory, or may directly include several files. In this embodiment, a specified file is from the folder "Industry survey" in "My file".

Still referring to part (2) of FIG. 13A, for example, the file "My file" includes four folders that belong to a level-2 directory: "Font library", "Industry survey", "Beachside snapshots", and "Design trend", and the folder "Industry survey" further includes two files that belong to a level-3 directory: "Operational notes" and "Trip to ancient town".

Still referring to part (2) of FIG. 13A, for example, the folder "Operational notes" includes a file that is in a DOC format and whose file name is "Operational notes 1", and the folder "Trip to ancient town" includes a file that is in the DOC format and whose file name is "Ancient town document".

For example, after the user selects check boxes corresponding to the two files "Operational notes 1" and "Trip to ancient town", as shown in part (1) of FIG. 13B, the mobile phone selects, in response to the operation behavior, the two files "Operational notes" and "Trip to ancient town". If the user then taps the control 10k-2, in response to the operation behavior, the mobile phone stores information about the file selected by the user, returns to the interface 10j, and displays, in an area corresponding to the "Select file" 10j-5, a quantity of files selected by the user, for example, "2 folders" as shown in part (2) of FIG. 13B.

It may be understood that in actual application, if the user wants to add files in all folders displayed in the interface 10m to the home screen card 10a-1, the user may directly select a check box corresponding to "All files", to select the files in all the folders displayed in the interface 10k.

It should be noted that, in the foregoing "select all" scenario, if a quantity of files in all the folders displayed in the plane 10k does not exceed a maximum quantity allowed to be added to the home screen card 10-1, these files may be directly added to the home screen card 10a-1. If the quantity of files in all the folders exceeds the maximum quantity allowed to be added to the home screen card 10-1, prompt information may pop up in the interface 10k shown in part (1) of FIG. 13B, for example, "The home screen card 10a-1 supports addition of a maximum of 10 files. Please select again".

It should be understood that, the foregoing description is only an example listed for better understanding of the technical solution in this embodiment, and is not used as a unique limitation on this embodiment.

In this way, the entry for editing a card is provided, and the "intelligent recommendation" manner and the "specify file" manner are provided for a user to select, so that an actual use scenario and a use habit of the user can be better met, thereby improving user experience.

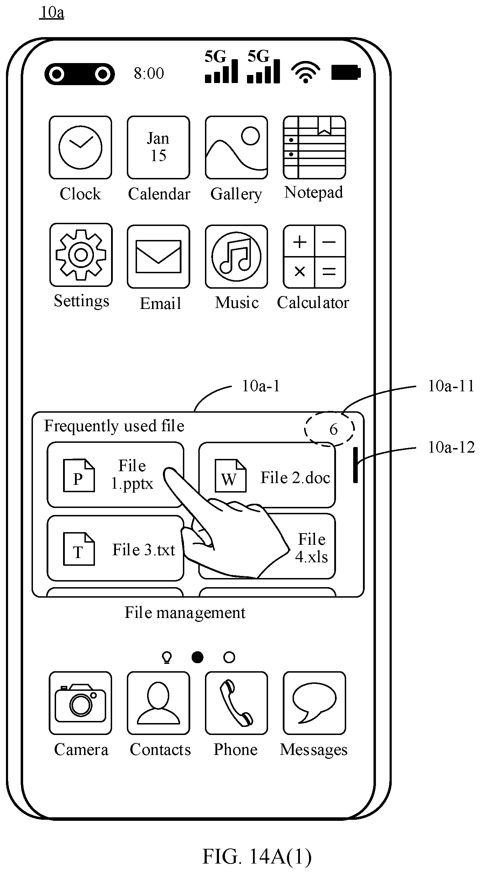

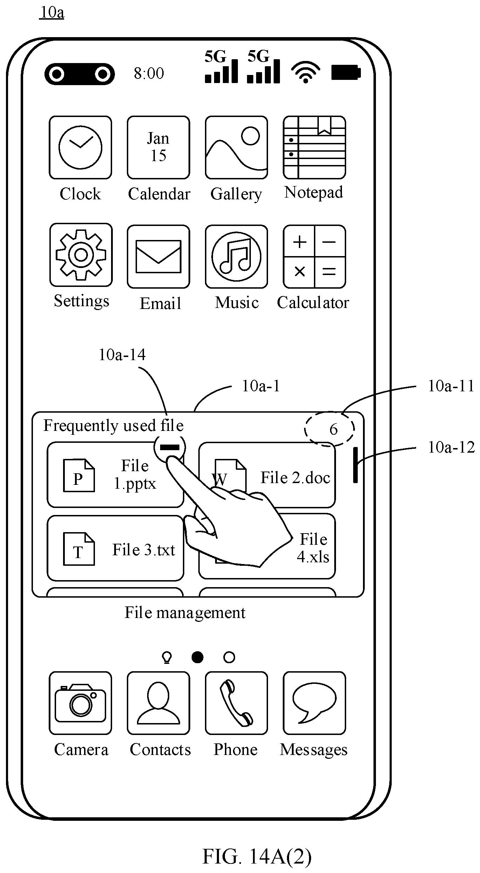

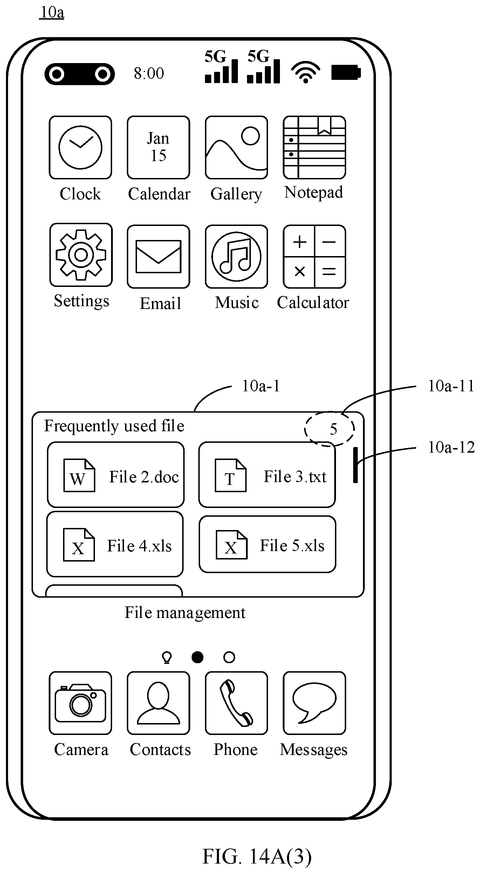

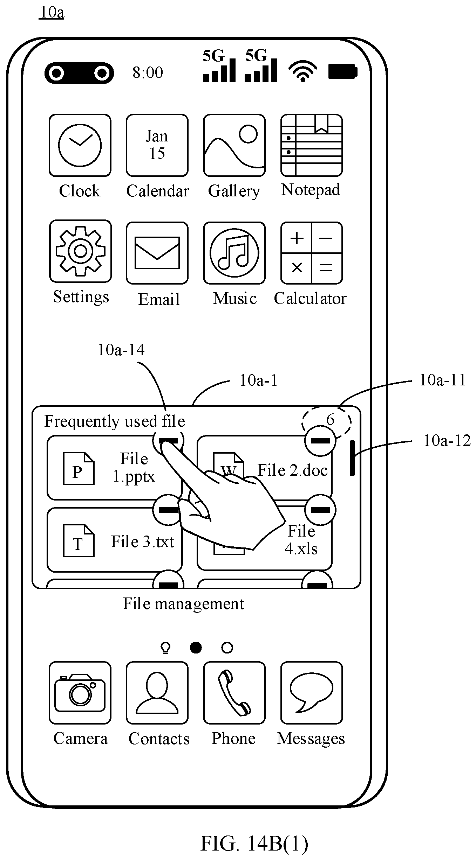

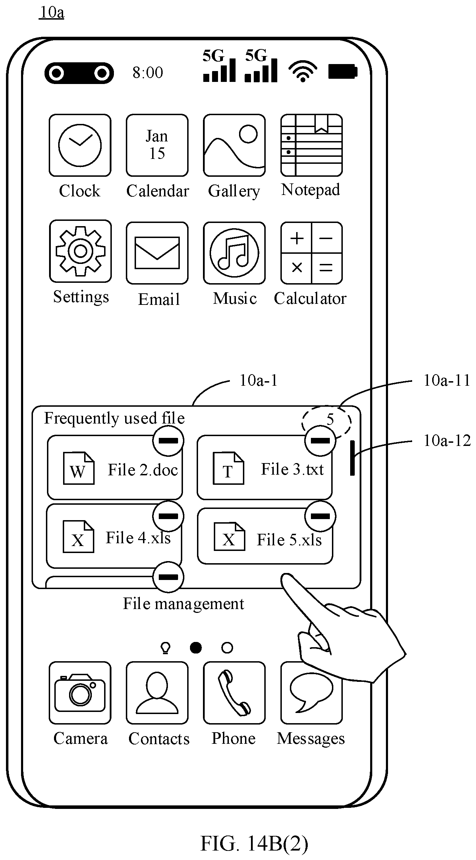

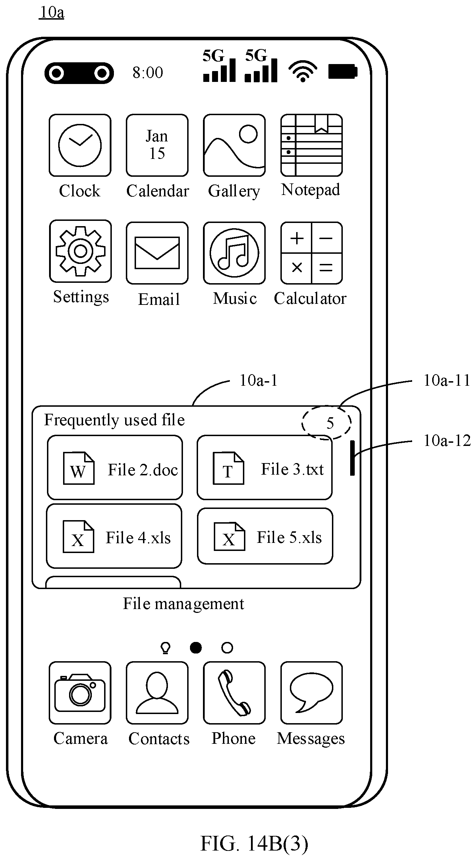

The following describes, with reference to FIG. 12A(1) to FIG. 12A(3), FIG. 14A (1) to FIG. 14A(3), and FIG. 14B (1) to FIG. 14B(3), example implementations of deleting a file from a home screen card according to an embodiment of this application.

For example, in some implementations, deleting a file managed in a home screen card may be implemented, for example, in a manner of deleting the entire home screen card to delete all files managed in the home screen card. A specific implementation is shown in FIG. 12A(1) to FIG. 12A(3). For details, refer to the foregoing descriptions. Details are not described herein again.

For example, in some other implementations, deleting a file managed in a home screen card may be separately deleting one or more files. The following describes this deletion manner with reference to14A(1) to FIG. 14B(3).

As shown in FIG. 14A(1), in an implementation, after the user performs an operation (such as a touch and hold operation) on a file icon corresponding a file, such as a file 1.pptx, to be deleted from the home screen card 10a-1, the mobile phone responds to the operation behavior. As shown in FIG. 14A(2), a control 10a-14 used to delete the file icon may appear in an area in which the file icon corresponding to the file 1.pptx is located.

Referring to FIG. 14A(2), for example, if the user taps the control 10a-14, as shown in FIG. 14A(3), in response to the operation behavior, the mobile phone deletes the file icon corresponding to the file 1.pptx from the home screen card 10a-1, and moves locations of remaining file icons in sequence. The home screen card 10a-1 obtained after the remaining file icons are moved is shown in FIG. 14A(3).

In addition, it may be understood that in actual application, when the locations of the remaining file icons are moved, a location relationship between the remaining file icons may also be adjusted based on a latest use situation. This is not limited in this embodiment.

Still referring to FIG. 14A(2), for example, if the user performs an operation (for example, a double-tap operation) on another area in the home screen card 10a-1, the mobile phone cancels the control 10a-14 in response to the operation behavior, as shown in FIG. 14A(1).

For example, in another implementation, after the user performs an operation (such as a touch and hold operation) on a file icon corresponding a file, such as a file 1.pptx, to be deleted from the home screen card 10a-1, the mobile phone responds to the operation behavior. As shown in FIG. 14B(1), a control 10a-14 used to delete a corresponding file icon may appear in an area in which a file icon corresponding to each file managed in the home screen card 10a-1 is located. In this way, the user can delete a plurality of files in batches with one operation, and does not need to perform a specific operation on a file icon corresponding to each file, to display a corresponding control 10a-14.

Still referring to FIG. 14B(1), for example, if the user taps the control 10a-14 in a file icon area corresponding to the file 1.pptx, as shown in FIG. 14B(2), in response to the operation behavior, the mobile phone deletes the file icon corresponding to the file 1.pptx from the home screen card 10a-1, and moves locations of remaining file icons in sequence. The home screen card 10a-1 obtained after the remaining file icons are moved is shown in FIG. 14B(2).

Still referring to FIG. 14B(1), for example, if the user further needs to continue to delete another file, the user may perform an operation on the control 10a-14 in a file icon area corresponding to the file, to delete a corresponding file. If the user wants to end the deletion operation, the user may perform an operation (such as double-tap operation) in another area in the home screen card 10a-1, and the mobile phone cancels the control 10a-14 in response to the operation behavior, as shown in FIG. 14B(3).

It may be understood that because a file icon in the home screen card 10a-1 is bound to a shortcut of a file, once the file icon is deleted, the file managed in the home screen card 10a-1 can be deleted.

It should be understood that, the foregoing description is only an example listed for better understanding of the technical solution in this embodiment, and is not used as a unique limitation on this embodiment.

In addition, it should be noted that, in an actual application, to avoid a gesture conflict, when a file managed in the home screen card 10a-1 is deleted in the manners shown in 14A(1) to FIG. 14B(3), a touch and hold operation that is performed may be an operation performed in a hot area at a specified location in the home screen card.

It may be understood that the hot area may be understood as a transparent element. The element is allowed to be placed in an area, such as any area in the home screen card 101-1, and an interactive operation is added to the element. Specifically, in this embodiment, the control 10a-14 for triggering and displaying deletion of a file may be added to the element. To be specific, after the user performs an operation in the hot area, the mobile phone displays, in response to the operation behavior, the control 10a-14 for deleting a file, thereby avoiding a gesture conflict and ensuring user experience.

It may be learned from the descriptions of the foregoing embodiments that, according to the file management method provided in the embodiments, a home screen card used to manage a file is displayed on a home screen, and a shortcut entry of a file that meets a use requirement of a user is directly displayed in the home screen card based on a user requirement, for example, the foregoing file icon established a shortcut with a file, so that the user can directly performing searching in the home screen card to directly open a file that the user wants to view. The entire search process is convenient and simple, thereby greatly improving user experience.

In addition, it may be understood that, a home screen card for file management is used as an example in the foregoing embodiment. In actual application, the foregoing file management manner may also be applied to another application. For example, for a home screen card that manages a camera application, a calendar application, or the like, for related descriptions of a process of adding a home screen card, a process of setting a file path of a home screen card, and a process of using a function of a home screen card, references may be specifically made to the detailed descriptions in the foregoing embodiments. Details are not described herein again.

In addition, it may be understood that to implement the foregoing functions, the electronic device includes corresponding hardware and/or software modules for performing the functions. Algorithm steps in the examples described with reference to the embodiments disclosed in this specification can be implemented in this application by hardware or a combination of hardware and computer software. Whether a function is performed by hardware or computer software driving hardware depends on particular applications and design constraints of the technical solutions. Persons skilled in the art may use different methods to implement the described functions for each particular application with reference to the embodiments, but it should not be considered that the implementation goes beyond the scope of this application.

In addition, it should be noted that, in an actual application scenario, the file management method provided in the foregoing embodiments that is implemented by the electronic device may alternatively be performed by a chip system included in the electronic device, where the chip system may include a processor. The chip system may be coupled to a memory, so that when the chip system runs, a computer program stored in the memory is invoked to implement the foregoing steps performed by the electronic device. The processor in the chip system may be an application processor, or may be a processor that is a non-application processor.

In addition, an embodiment of this application further provides a computer-readable storage medium. The computer-readable storage medium stores computer instructions. When the computer instructions are run on an electronic device, the electronic device is enabled to perform the foregoing related method steps, to implement the file management method in the foregoing embodiments.

In addition, an embodiment of this application further provides a computer program product. When the computer program product runs on an electronic device, the electronic device is enabled to perform the foregoing related steps, to implement the file management method in the foregoing embodiments.

In addition, an embodiment of this application further provides a chip (which may alternatively be a component or a module). The chip may include one or more processing circuits and one or more transceiver pins. The transceiver pin and the processing circuit communicate with each other through an internal connection channel. The processing circuit performs the foregoing related method steps to implement the file management method in the foregoing embodiment, to control a receive pin to receive a signal and to control a transmit pin to send a signal.

In addition, it may be learned from the foregoing description that, the electronic device, the computer-readable storage medium, the computer program product, or the chip provided in the embodiments of this application may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

In conclusion, the foregoing embodiments are merely intended for describing the technical solutions in this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A file management method, wherein
displaying a first interface, wherein
the first interface comprises a first card, the first card comprises M file icons, each of the M file icons corresponds to one file in an electronic device, and M is a positive integer.

2. The method according to claim 1, wherein the first interface is a home screen; and
the displaying a first interface comprises:
displaying a home screen card setting entry on the home screen in response to a first operation;
displaying a setting interface of a home screen card in response to a second operation performed on the home screen card setting entry, wherein the setting interface comprises a home screen card entry for file management;
displaying a card form selection interface in response to a third operation performed on the home screen card entry for file management;
adding the first card to the home screen based on a selected card form in response to a fourth operation performed on the card form selection interface; and
adding a file to the first card in response to a fifth operation, and displaying a file icon corresponding to the file in the first card.

3. The method according to claim 2, wherein the adding a file to the first card in response to a fifth operation comprises:
displaying a file addition floating ball in a file preview interface, wherein the file addition floating ball is in a folded state;
displaying a first navigation bar of the file addition floating ball in response to a sixth operation performed on the file addition floating ball, wherein the first navigation bar displays an addition entry for adding a file displayed in the file preview interface to the first card; and
in response to a seventh operation performed on the addition entry, adding the file displayed in the file preview interface to the first card, and collapsing the first navigation bar, wherein the file addition floating ball is in the folded state.

4. The method according to claim 3, wherein before the adding the file displayed in the file preview interface to the first card, the method further comprises:
displaying a first prompt window, wherein the first prompt window comprises a first option and a second option;
when an eighth operation performed on the first option is received, in response to the eighth operation, adding the file in the file preview interface to the first card, and canceling display of the first prompt window; and
when a ninth operation performed on the second option is received, in response to the ninth operation, creating a new card, adding the file in the file preview interface to the newly created card, and canceling display of the first prompt window.

5. The method according to claim 3, wherein the method further comprises:
collapsing the first navigation bar when specified time is reached and the seventh operation is not received, wherein the file addition floating ball is in the folded state;
or
collapsing the first navigation bar when a tenth operation performed on the file preview interface is received in the specified time, wherein the file addition floating ball is in the folded state.

6. The method according to claim 2, wherein the adding a file to the first card in response to a fifth operation comprises:
displaying a second interface in response to a tenth operation performed on a file management application, wherein the second interface is a page that is opened level by level based on a storage path, and the second interface displays a to-be-added file;
displaying a second navigation bar in response to an eleventh operation performed on the second interface, wherein the second navigation bar comprises a third option;
displaying a first menu bar in response to a twelfth operation performed on the third option, wherein the first menu bar comprises a fourth option; and
after the to-be-added file is selected, adding the to-be-added file to the first card in response to a thirteenth operation performed on the fourth option.

7. The method according to claim 2, wherein the first card further comprises a file addition entry; and
the adding a file to the first card in response to a fifth operation comprises:
displaying a third interface in response to a fourteenth operation performed on the file addition entry, wherein the third interface displays a to-be-added file and a fifth option; and
after the to-be-added file is selected, adding the to-be-added file to the first card in response to a fifteenth operation performed on the fifth option.

8. The method according to claim 1, wherein the first interface is a home screen, a second card is displayed on the home screen, and the second card is a home screen card for file management; and
the displaying a first interface comprises:
displaying a second menu bar in response to a sixteenth operation performed on the second card, wherein the second menu bar comprises a more file management card option;
displaying a card form selection interface in response to a seventeenth operation performed on the more file management card option;
adding the first card to the home screen based on a selected card form in response to an eighteenth operation performed on the card form selection interface; and
adding a file to the first card in response to a nineteenth operation, and displaying a file icon corresponding to the file in the first card.

9. The method according to claim 8, wherein a use scenario of a file managed in the first card is different from a use scenario of a file managed in the second card.

10. The method according to claim 8, wherein a use place of a file managed in the first card is different from a use place of a file managed in the second card.

11. The method according to claim 1, wherein the method further comprises:
displaying a third menu bar in response to a twentieth operation performed on the first card, wherein the third menu bar comprises a remove option and an edit option; and
removing the first card from the home screen in response to a twenty-first operation performed on the remove option.

12. The method according to claim 11, wherein the method further comprises:
displaying a first file source option and a second file source option in response to a twenty-second operation performed on the edit option;
when an operation on the first file source option is received, recommending M files from a folder selected by a user as the M files managed in the first card, or recommending M files from N folders recommended by a system as the M files managed in the first card; and
when an operation on the second file source option is received, using M files selected by the user as the M files managed in the first card.

13. The method according to claim 1, wherein a card size of the first card is fixed.

14. The method according to claim 1, wherein a card size of the first card is variable, and a maximum size of the first card is 4×2.

15. The method according to any one of claims 1 to 14, wherein the method further comprises:
receiving a twenty-third operation on any file icon in the first card; and
switching from the first interface to a fourth interface in response to the twenty-third operation, wherein the fourth interface is a preview interface of a file corresponding to the tapped file icon.

16. The method according to any one of claims 1 to 14, wherein the method further comprises:
when the electronic device is in a lock screen interface and is in a screen-off standby mode, in response to an operation of lighting the lock screen interface, lighting the lock screen interface, and displaying the first card in the lock screen interface.

17. An electronic device, wherein the electronic device comprises: a memory and a processor, wherein the memory is coupled to the processor; and the memory stores program instructions, and when the program instructions are executed by the processor, the electronic device is enabled to perform the file management method according to any one of claims 1 to 16.

18. A computer-readable storage medium, comprising computer instructions, wherein when the computer instructions are run on an electronic device, the electronic device is enabled to perform the file management method according to any one of claims 1 to 16.
